Europäisches Patentamt

European Patent Office

Office européen des brevets

(19)

(11) EP 0 401 854 B1

(12) EUROPEAN PATENT SPECIFICATION

(45) Date of publication and mention
of the grant of the patent:
06.08.1997 Bulletin 1997/32

(51) Int Cl.⁶: **H04N 7/30**, H04N 5/92

(21) Application number: 90110889.4

(22) Date of filing: 08.06.1990

(54) **An apparatus for orthogonal transform coding**

Einrichtung zur orthogonalen Transformationskodierung

Dispositif pour codage par transformation orthogonale

(84) Designated Contracting States:
DE FR GB NL

(30) Priority: 09.06.1989 JP 147891/89
04.08.1989 JP 203285/89
11.01.1990 JP 4152/90

(43) Date of publication of application:
12.12.1990 Bulletin 1990/50

(73) Proprietor: MATSUSHITA ELECTRIC INDUSTRIAL
CO., LTD.
Kadoma-shi, Osaka-fu, 571 (JP)

(72) Inventor: Juri, Tatsuro
Osaka-shi, Osaka-fu (JP)

(74) Representative: Eisenführ, Speiser & Partner
Martinistrasse 24
28195 Bremen (DE)

(56) References cited:
EP-A- 0 207 774      EP-A- 0 260 139
EP-A- 0 267 578      EP-A- 0 267 579
EP-A- 0 282 135      US-A- 4 821 119

• NTC'78 CONFERENCE RECORD 1978
NATIONAL TELECOMMUNICATIONS
CONFERENCE vol. 2, 3 December 1978, IEEE,
NEW YORK, US; pages 1911 - 1916;
A.G.TESCHER: 'Rate Adaptive Communication'
• IEEE GLOBAL TELECOMMUNICATIONS
CONFERENCE AND EXHIBITION, HOLLYWOOD,
FLORIDA vol. 2, 28 November 1988, IEEE, NEW
YORK,US, pages 743 - 749; K.H.TZOU ET AL.:
'Compatible hdtv coding for broadband ISDN'

Remarks:
The file contains technical information submitted
after the application was filed and not included in this
specification

**Description**

BACKGROUND OF THE INVENTION

Field of the Invention

The present invention relates to an apparatus for orthogonal transform coding for use in suppressing code signal quantity to be processed and transmitted.

Description of the Prior Art

High efficiency coding has been important with development of digital technology of picture signals. As the high efficiency coding technology, there has been known orthogonal transform coding, in which input time sequential signals are transformed to different signals of an orthogonal function such as frequency component. As the orthogonal transformation, a Fourier transformation, a discrete cosine transformation (DCT) and an Hadamard transformation are well known. Especially, DCT has been noticed as the orthogonal transform suitable for processing the picture information.

EP-A-0 267 579 defining the closest prior art from which the invention proceeds discloses an image coding system having a plurality of coding characteristics such as quantization characteristics. In this system, a coding control circuit selects either one of the coding characteristics by forming a histogram in response to a sequence of coefficients resulting from a sequence of digital image signals, to monitor an amount of information in every one of predetermined intervals. The amount of information is calculated by summing up the coefficients in relation to every one of the coding characteristics. An optimum one of the coding characteristics is indicated by the coding control circuit to code the coefficient sequence into a sequence of coded signals in accordance with the optimum coding characteristics. The coefficient sequence in each frame may be divided into a sequence of blocks each of which is judged to be either valid or invalid in relation to each coding characteristic. Results of judgement may be included in the amount of information.

EP-A-0 207 774 discloses a block encoder comprising first block generating means for constituting a three-dimensional large size block, and a plurality of second block generating means for dividing the large size block into small size blocks. The small size blocks of two dimensions and three dimensions are changed over adaptively in dependence on image information.

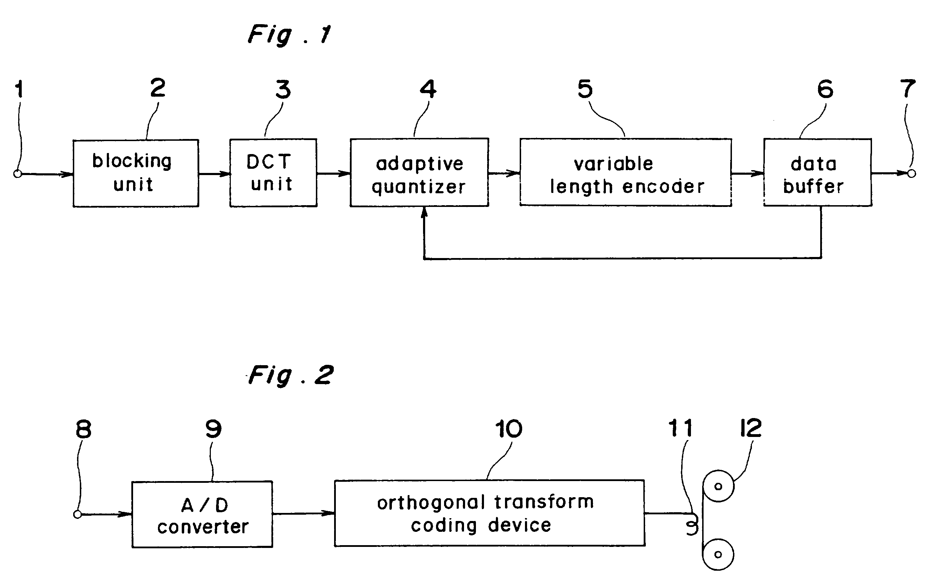

A further example of high efficiency coding will be explained hereinafter with reference to Fig. 1 showing an example of a conventional high efficiency coding device in which 1 denotes an input unit, 2 a blocking unit, 3 a DCT unit, 4 an adaptive quantizer, 5 a variable length encoder, 6 a data buffer and 7 an output unit.

In the encoding device shown in Fig. 1, the digital image signals input from the input unit 1 are separated into blocks for DCT unit basis in the blocking unit 2. In the high efficiency coding of the image picture, two dimensional DCT for a block constructed by total 64 picture elements made of the horizontal 8 X vertical 8 samples is often used. The blocked image signals are transformed by two dimensional DCT in the DCT unit 3 and DCT components of the image signals can be obtained. The DCT components are quantized in the adaptive quantizer 4 and subsequently encoded with the variable length code in the variable length encoder 5, further the code rate of the encoded image signals are adjusted in a predetermined rate in the data buffer 6 and are output from the output unit 7.

The variable length encoding is a way of coding in which a word of higher generation probability is assigned by a shorter code and a word of lower generation probability is assigned by a longer code. Table 1 shows correspondence between the three bit data 0, 1, 2.....7 and their variable length codes. In the examples, numbers 0 and 1 are assigned by 2 bit code, 2 and 3 by 3 bit code and 4, 5, 6 and 7 are assigned by 4 bit code.

Table 1

| data | variable length code |
|------|----------------------|
| 0 | 00 |
| 1 | 01 |
| 2 | 100 |
| 3 | 101 |
| 4 | 1100 |
| 5 | 1101 |
| 6 | 1110 |
| 7 | 1111 |

Since the data of the result of DCT transform shows usually exponential distribution, the generation probability of 0 and 1 is much greater than that of 4, 5, 6 and 7, the average bit number of data after the coding is smaller than 3 bits. It is noted that when the variable length coding is used, the data rate after the coding may change depending on the picture quality. Due to the fact mentioned above, in the conventional device shown in Fig. 1, in order to prevent an over flow or under flow in the data buffer 6, the adaptive quantizer 4 controls to increase the quantization width when the amount of the data in the data buffer 6 increases and to decrease the quantization width when the data amount in the data buffer 6 is decreased.

The conventional DCT coding device as mentioned above shows drawbacks as mentioned hereinafter.

(1) Since the variable length coding is used, even if 1 error bit occurs, word synchronization is disturbed, although it depends on the transmission line, and decoding of data is prevented. Such word transmission error causes the picture to be deteriorated remarkably. Therefore, it is difficult to employ the conventional DCT device, in particular, in devices wherein transmission errors occurs in a high probability such as VTR.

(2) In order to maintain the data rate constant, conventionally there is used a feed back system using a buffer. However, actual images data have data unbalance and it is difficult to obtain optimum coding by the feed back technique. In particular, in case where the information of the front half data row is small and that of the rear half is large, unnecessary data are assigned to the front half, whereby the data becomes insufficient, resulting in a remarkable picture deterioration.

(3) In case where the amount of the image information is large in the high efficiency coding using DCT, distortion due to quantization increases and block distortion may be generated.

## SUMMARY OF THE INVENTION

An essential object of the present invention is to provide an orthogonal transform coding device which can transform the signals with undesired effect due to the transmission errors occurring in the variable length coding system decreased and can improve the picture quality in the high efficiency coding device.

In order to accomplish the object mentioned above, according to the present invention, there is provided an orthogonal transform coding device comprising a large block forming means for assembling sample values of input signals to form a large block of the sampled input signals, a small block forming means for forming small blocks by dividing sample values of input signals into neighboring sample values, an orthogonal transform means for orthogonally transforming the sample values in the small block for each small block in a large block, when the small blocks collected in a predetermined number are called the large block, a of quantizing means having a plurality of kinds of quantizers each of which quantizes the orthogonally transformed components provided by said orthogonal transform means, a data amount estimating means for estimating data amount, a selection means for selecting an optimum quantizer in the quantizing means for every small block corresponding to the result of the estimation of the data amount of every small block by the data amount estimating means, coding means for converting the quantized value obtained in the quantizing means into variable length coded data, and transmission means for transmitting variable length codewords obtained by said quantizing means, and information and the like related to said selected quantizing means by fixed length for each large block, characterized in that said data amount estimating means is provided for estimating the data amount after variable length coding by calculating the code length after quantization and variable length coding per each small block for a plurality of quantizing means, and said selection means is provided for selecting an optimum quantizer in the quantizing means for every small block so that the data amount after the variable length coding with respect to said large block suits to the data amount to be transmitted with respect to said large block, based on the data amount after the variable length coding for each of said small block.

Further advantageous embodiments are defined in the dependent claims.

In the orthogonal transform coding device as mentioned above, the coded data amount is previously estimated so that the optimum quantizer can be selectively employed for quantizing the orthogonally transformed data in the large block. In addition, since it is possible to control the amount of the data precisely different from the conventional feed back control, the variable length coding can be accomplished so that predetermined length of code can be realized in a small range, whereby it is possible to use the variable length coding in such devices as digital VTRs that the transmission errors often occur.

## BRIEF EXPLANATION OF THE DRAWINGS

Fig. 1 is a block diagram showing an example of a conventional orthogonal transform coding device,

Fig. 2 is a block diagram showing an embodiment of a digital VTR to which the orthogonal transform coding device according to the present invention is applied,

Fig. 3 is a block diagram showing an example of the orthogonal transform coding device according to the present invention,

Figs. 4 to 8 are respectively block diagrams showing various examples of the large blocking unit used in the device according to the present invention,

Fig. 9 is a block diagram showing an example of the small blocking unit used in the device according to the present invention,

Figs. 10 is a block diagram showing an example of the orthogonal transform unit used in the present invention,

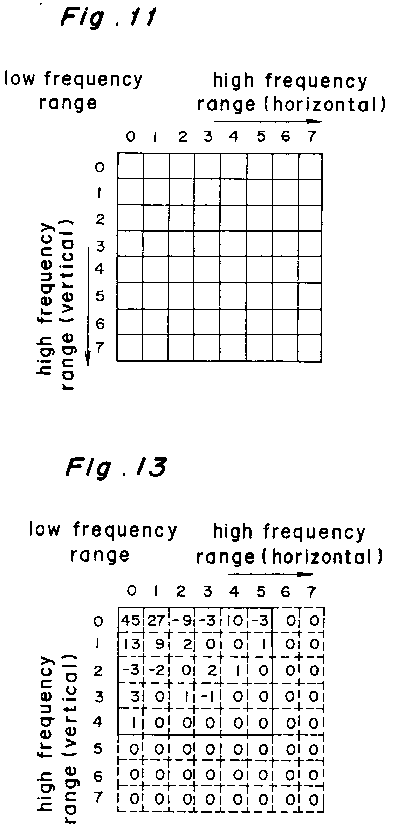

Figs. 11 and 13 are schematic diagrams showing an example of quantized values of the orthogonal transformed values,

Fig. 12 is a block diagram of an example of 3 dimensional orthogonal transform,

Fig. 14 is a block diagram showing an example of the transmission unit,

Fig. 15 is a schematic diagram showing an example of the order of data transmission used in the second example of the transmission unit,

Fig. 16 is a block diagram showing the second example of transmission unit,

Fig. 17 is a schematic diagram showing an example of the order of data transmission used in the third example of the transmission unit,

Fig. 18 is a schematic diagram showing an example of the order of data transmission in which the third example of the order of the data transmission is applied to the first example of the transmission unit,

Fig. 19 is a block diagram showing an example of the variable length coding unit,

Fig. 20 is a block diagram showing a fourth example of the variable length coding unit,

Figs. 21 to 23 are block diagrams showing first to third examples of the data estimating unit,

Figs. 24 to 27 are respectively block diagrams showing first to fourth examples of the quantizing unit,

Figs. 28 and 29 are flow charts showing first and second examples of the operation of the quantizer selecting unit,

Figs. 30 and 31 are respectively block diagrams showing third and fourth example of the quantizer selecting unit,

Fig. 32 is a block diagram showing an example of the coding unit used in another embodiment of the present invention,

Figs. 33 is a block diagram showing an example of decoding unit,

Fig. 35 is a schematic diagram showing a manner of divide the signals into four regions by the filter used in the embodiment shown in Fig. 32.

## DETAILED DESCRIPTION OF THE PREFERRED EMBODIMENTS

Referring to Fig. 2, showing a general structure of an example of a digital video tape recorder (referred to as VTR hereinafter) to which an orthogonal transform coding device according to the present invention is employed. In Fig. 2, reference numeral 8 denotes an input terminal of the device, 9 an analog digital converter (A/D converter), 10 an orthogonal transform coding device according to the present invention, 11 a magnetic recording head of the digital VTR and 12 a magnetic recording tape. Television signals in an analog form fed from the input terminal 8 are converted into sample values of digital picture signals in the A/D converter 9. The sample values of the digital picture signals are subjected to data compression in the orthogonal transform coding in the orthogonal transform coding device 10, whereby the compressed data are recorded in the magnetic tape 12 through the magnetic recording head 11. To employ the orthogonal transform coding device according to the present invention in a picture recording device or picture transmission device such as a digital VTR enables to decrease the data rate and long time recording.

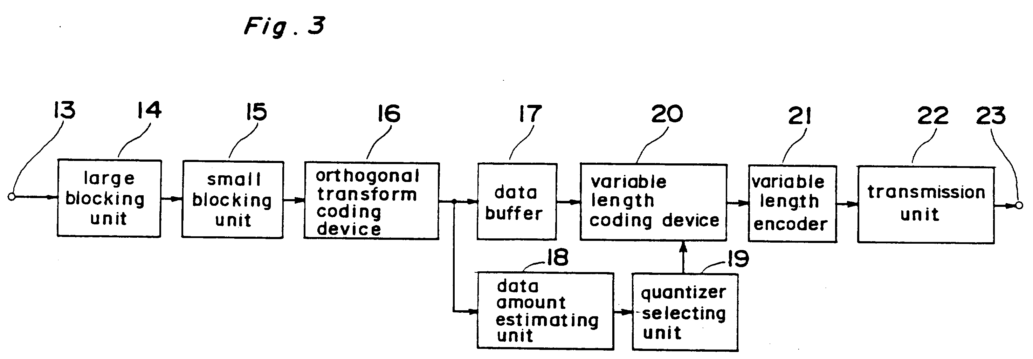

Referring to Fig. 3 showing a block diagram of the orthogonal transform coding device according to the present invention, 13 denotes an input terminal of the device, 14 a large blocking unit, 15 a small blocking unit, 16 an orthogonal transform coding device, 17 a data buffer, 18 a data amount estimating unit, 19 a quantizer selecting unit, 20 a plurality of quntizers, 21 a variable length encoder, 22 a transmission unit and 23 an output terminal. The picture signals in digital form fed from the input terminal 13 are divided into a plurality of large blocks each of which comprises a plurality of sample values in the large blocking unit 14.

Each of the large blocks is further divided into a plurality of small blocks in the small blocking unit 15. Each of small block comprises sampled value of the picture data for depicting a rectangular shape on a picture plane of a display unit of a VTR. The sample values divided into the small block are orthogonally transformed in the orthogonal transform coding device 16. The orthogonal components orthogonally transformed from the sample values are inputted to the buffer 17 and data amount estimating unit 18 by the large block basis. In the data amount estimating unit 18, the data amount of coded orthogonal components in every small block is calculated for a plurality of quantizers previously prepared, then one of the quantizers is selected for every small block in the quantizer selecting unit 19 based on the result of the calculation. The orthogonal components inputted to the buffer 17 are delayed therein until the quantizer is selected. The orthogonal components are quantized in the selected quntizers 20 and the quantized orthogonal components are coded with the variable length form in the variable length encoder 21. The quantized value coded with the variable length form is fed to the output terminal 23 through the transmission unit 22.

As mentioned above, in the present invention, by simulating the data amount before quantization, it becomes possible to select the optimum quantizer. Also since it is possible to control the data amount accurately different from the feed back control used in the prior art, it becomes possible to encode the data in the variable length form of a constant length of a small range, whereby the variable length coding can be employed in the digital VTR in which transmission errors occur frequently.

The detailed operation of the respective components shown in Fig. 3 are explained hereinafter.

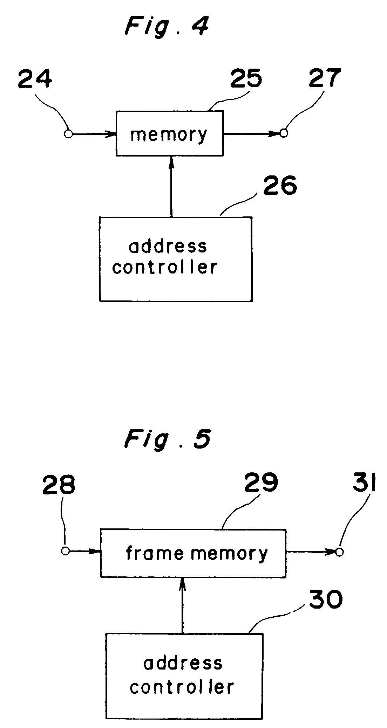

The large blocking unit is explained first with reference to Fig. 4 showing detailed structure of the large blocking unit. 24 denotes an input terminal, 25 a memory, 26 an address controller, 27 an output terminal. The sample value inputted from the input terminal is inputted to the memory 25 and outputted to the output terminal 27 according to the control of the address controller 26. As mentioned above, in the large blocking unit 14, the input signals are stored in the memory 25 and outputted every large block.

In the first example, the large blocking unit is so constructed the address controller 26 shown in Fig. 4 forms every large block with every one field data of the television signals, whereby it becomes possible to form the memory 25 by a small memory in the field. In addition, for the moving picture, it is possible to compress the data every field so that the compressing effect can be improved.

Fig. 5 shows the second example of the large blocking unit 14 in which 28 denotes an input terminal, 29 a frame memory, 30 an address controller, 31 an output terminal. The sample values inputted to the frame memory 29 and outputted to the output terminal 31 according to the control of the address controller 30. In the second example, by employing the frame memory, every large block is formed by signals of a plurality of fields of the television signals, whereby it becomes possible to compress the data using the redundancy between the fields, a higher compression rate can be realized.

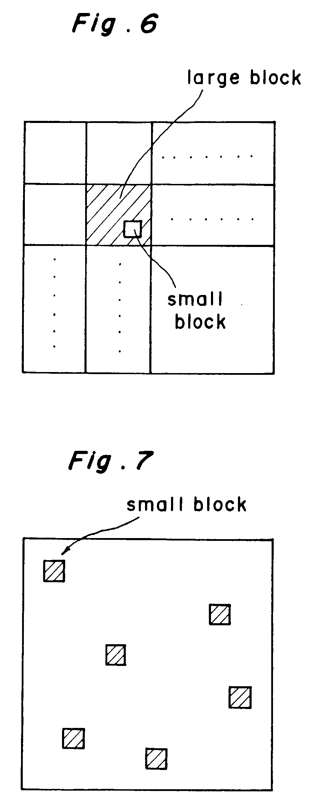

Fig. 6 shows the third example of the large blocking unit 14 in which every large block is formed by signals of adjacent picture elements on the picture plane. Since the small blocks in the large block are adjacent each other, it becomes possible to compress the data using the redundancy between the small blocks. Such large blocking as shown in Fig. 6 can be realized by controlling the output address of the address controller 28 in the circuit shown in Fig. 4.

Fig. 7 is a schematic drawing for explaining the fourth example of the large blocking unit 14, in which the shaded blocks show small blocks. An assembly of the shaded small blocks forms a large block. As mentioned above, in the fourth example of the large blocking unit, the large block is formed by assembling small blocks situated on various positions on the picture plane in a shuffling manner, whereby the amount of information contained in the respective large blocks is substantially equal since the amount of information on the picture plane is scattered. Accordingly, it is possible to compress the data in high efficiency, even if the amount of information is greatly position by position on the picture plane. Moreover, since the data rate of the words of the compressed codes is averaged, it is easy to control the data amount constant in the large block basis. Such blocking can be made by controlling the output address in the address controller 26 in the circuit shown in Fig. 4.

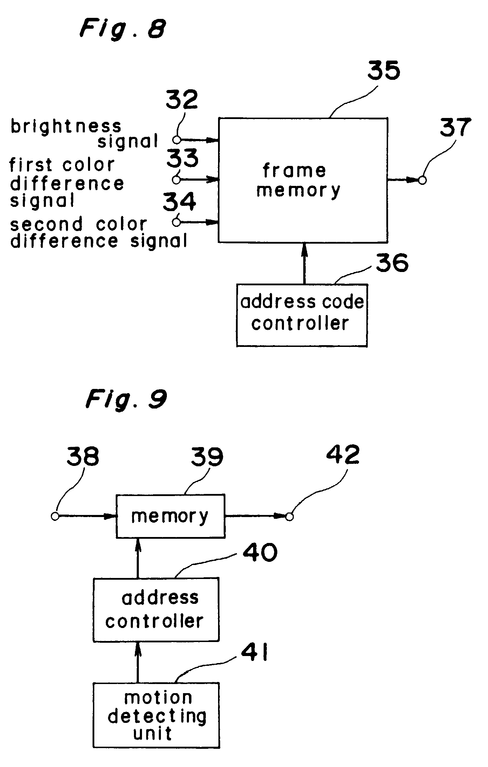

Fig. 8 shows the fifth example of the large blocking unit 14 in which 32 denotes a brightness signal input terminal, 33 a first color difference signal input terminal, 34 a second color difference signal input terminal, 35 a frame memory, 36 an address code controller, and 37 an output terminal. The respective samples of the input signals of the brightness signal, the first color difference signal and second color difference signal fed from the input terminals 32, 33 and 34 are inputted to the frame memory 35 and outputted to the output terminal 37 according to the control of the address controller 36. In the fifth example, each of the large block is formed by the brightness signals, the first color difference signals and second color difference signals containing them substantially the same rate. In general, the amount of information of the brightness signals and the color difference signals is unbalanced. Since each large block includes the same rate of the brightness signals and the first and second color difference signals, it becomes possible to average the amount of information similar to the fourth example of the ;large blocking unit. In case where the input signals are R, G and B signals,to cause all of the large blocks to include the same rate of R, G and B signals enables to average the amount of information.

The detail of the small blocking unit are explained hereinafter.

The small blocking unit is a unit for dividing the sample values of each of the large blocks into blocks for orthogonal transforming. The circuit for the small blocking is substantially the same as the circuit for the large blocking as shown in Fig. 4 which comprises a memory and address controller. However, it is noted that the small blocking unit can be formed with a relatively decreased capacity of memory compared to that in the large blocking unit. In practical use, the large blocking unit and the small blocking unit may be constructed by one memory and one address controller to decrease the circuit scale. Similar to the large blocking unit, the small blocking unit may be formed by various shapes. The examples of the small blocking are mentioned hereinafter.

In the first example of the small blocking unit, the small block is formed by the signals only in the field, whereby since the small blocks and the large blocks can be formed by the small memory in the field the circuit scale can be made small. In the moving picture of high motion, it is possible to decrease distortion by the in-field processing.

In the second example of the small blocking unit, the small block is formed by the signals of a plurality of consecutive fields, whereby it is possible to compress the data for eliminating the redundancy between the fields. Especially the above advantage can be obtained in the picture of small motion. Both of the first and second examples can be realized by control of the address controller of the device shown in Fig 4.

Fig. 9 is a schematic diagram showing the third example of the small blocking unit, in which 38 denotes an input terminal, 39 a memory, 40 an address controller, 41 a motion detecting unit and 42 an output terminal. The signals inputted through the input terminal 38 are stored in the memory 39. The address controller 40 operates in response to the signal of the motion detecting unit 41 to form the small block either by the signals within one field when the motion is large or by the signals of consecutive two fields or more than two fields when the motion of picture is small, the formed small blocks are outputted from the output terminal 42, whereby it is possible to compress the data with small distortion regardless the moving picture and still picture.

Next, the orthogonal transform coding unit 16 is explained. For the sake of brevity, an example of orthogonal transform is made by DCT using a small block consisting of 64 picture elements of horizontal 8 picture elements x vertical 8 picture elements is explained.

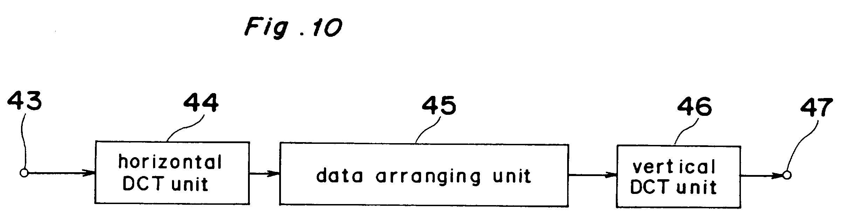

Referring to Fig. 10, 43 denotes an input terminal of the sample value of the small block, 44 a horizontal DCT unit for discrete transforming in the horizontal direction, 45 a data arranging unit for arranging horizontally lined data into vertically lined data, 46 a vertical DCT unit, 47 an output terminal. The sample values obtained in the small blocking unit 15 are inputted to the input terminal 43, discretely transformed in the horizontal direction in the horizontal DCT unit 44. The orthogonal components which are transformed in the DCT unit are arranged in the vertical direction in the data arranging unit 45. The arranged orthogonal components are discrete transformed in the vertical direction and outputted from the output terminal 47. Both of the horizontal and vertical orthogonal components of every small block which have been subjected to the DCT transforming in the horizontal direction and vertical direction are inputted to the buffer 17 and the data estimating unit 18 shown in Fig. 3 in the order of the orthogonal components representing the low frequency range.

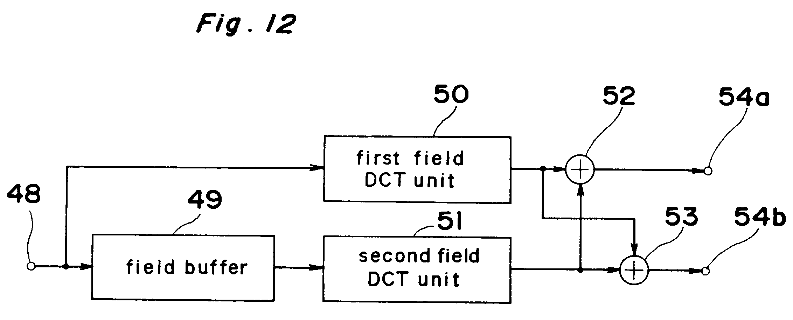

Although the above examples are described in connection with the two dimensional DCT, in the present invention, various kinds of DCT can be employed, for example, three dimensional DCT containing time axis DCT can be used. The simplest example of the three dimensional DCT device is shown in Fig. 12.

In Fig. 12 48 denotes an input terminal, 49 a field buffer, 50 a first field DCT unit, 51 a second field DCT unit, 52 an adder, 53 a subtracter. 54a and 54b are output terminals. The signals inputted from the input terminal 48 are processed in two dimension DCT transformation in the first field DCT unit 50 and are also inputted simultaneously to the field buffer 49 in which the signals are delayed by one field. The signals delayed by one field are processed two dimensional DCT transformation in the second field DCT unit 51. The output signals of the first field DCT unit 50 and second field DCT unit 51 are added in the adder 52 and are subtracted in the subtracter 53 and the result of both calculations are outputted from the output terminals 54a and 54b. In the example shown in Fig. 12, the DCT transformed components situated at the same spatial position on the picture plane but in two different fields are added on one hand and subtracted on the other hand. In this case, the added components are processed to quantization in the quantizer of small quantiztion range and the subtracted components are processed to quantization in the quantizer of large quantization range, whereby it is possible to compress the data amount, suppressing picture distortion. To calculate the sum and difference of the data is a lowest dimension (2 dimension) orthogonal transformation, it is possible to perform higher DCT by using information of more fields. As the field buffer, there may be commonly used the memory for the large blocking unit.

The transmission unit is explained below in detail.

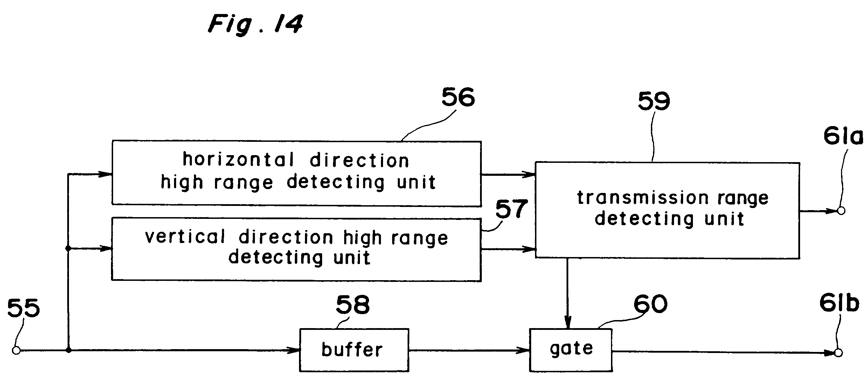

Fig. 13 shows example of the quantized values of the 2 dimension DCT transformed values. The transmission unit 22 is adapted to transmit the portion in Fig. 13 surrounded by the smallest rectangular (the portion surrounded by the solid lines in Fig. 13) containing all of only the non zero quntized data making the lowest frequency component (the quantized values at the position of horizontal 0 and vertical 0) in the horizontal direction and vertical direction as an origin. It is noted that the data on the origin are always transmitted. Accordingly, the transmission range of the block (the rectangular shape in Fig. 13) is decided by the position of the matrix shown in Fig. 13 on which non zero highest frequency components in the horizontal direction and the vertical direction exist. The number of the quantized values to be transmitted is decided by the area of the transmission range, therefore the number of the quantized values can be calculated by the product of the position of the highest frequency in the horizontal direction and the highest frequency in the vertical direction. In the example, the information of the transmission range can be represented by the horizontal coordinate 3 bits and the vertical coordinate 3 bits, total 6 bits. Accordingly, the data amount after the coding of each small block is the sum of the variable length coded word contained in the transmission range and the information of the transmission range. The structure of the first example of the transmission unit will be explained hereinafter.

In Fig. 14, 55 denotes an input terminal, 56 a horizontal direction high range detecting unit, 57 a vertical direction high range detecting unit, 58 a buffer, 59 a transmission range detecting unit, and 60 a gate. 61a and 61b are output terminals.

The quantized values inputted from the input terminal 55 are applied to the horizontal direction high range detecting unit 56 and the vertical direction high range detecting unit 57. In the horizontal direction high range detecting unit 56, there is detected a position on which the highest frequency component of non zero quantized value in the horizontal direction exists. In the vertical direction high range detecting unit 57, there is detected a position on which the highest frequency component of non zero quantized value in the vertical direction exists. The position thus detected is made as the origin of the rectangular shape shown in Fig. 13.

Using the outputs of the respective high range detecting units 56 and 57, the transmission range detecting unit 59 causes the gate 60 to pass only the quantized values in the transmission range among the quantized values temporarily stored and delayed in the buffer 58 by a predetermined time to the output terminal 61b. The transmission range detecting unit 59 outputs the information representing the transmission range from the output terminal 61a.

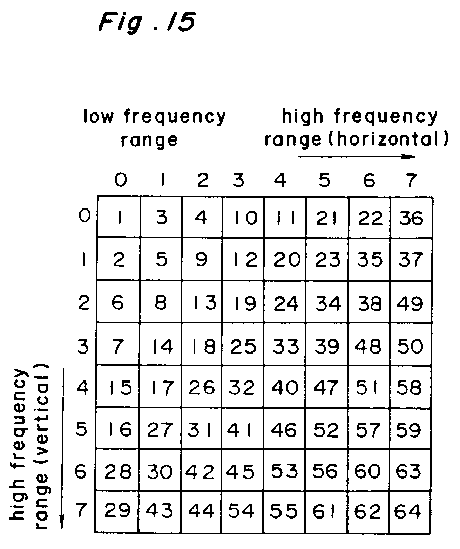

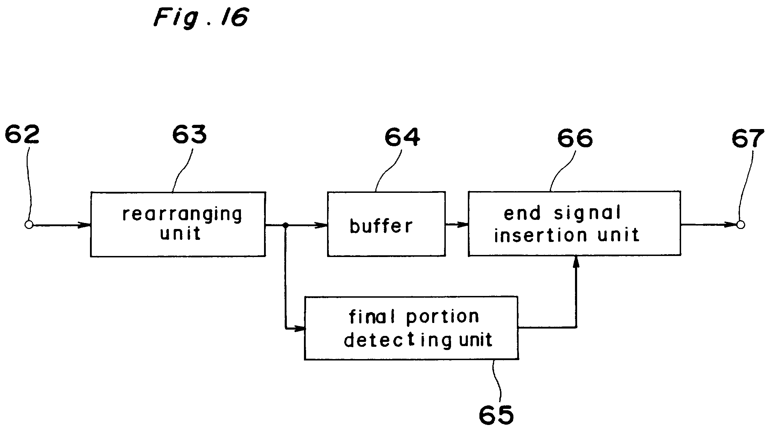

Fig. 15 shows a second example of the order of the transmission of the quantized values by the transmission unit. In the second example, the orthogonally transformed components are encoded in the order of the numbers shown in Fig. 15 from the lowest frequency component in the horizontal direction and the vertical direction in the small block and are transmitted, the coded word after the quantized value representing the highest frequency of the non 0 quantized values are replaced by the code representing the end of transmission. By this process, since it is possible to concentrate the high range values which have high generation probability of 0 to the rear half, it is possible to elongate the length of the consecutive 0. In place of the end of transmission mentioned above there may be used information representing the final coded word. Fig. 16 shows a second example of the transmission unit. In Fig. 16, 62 denotes an input terminal, 63 a rearranging unit, 64 a buffer, 65 a final portion detecting unit, 66 a end signal insertion unit, and 67 an output terminal. The quantized values inputted from the input terminal 62 are rearranged in the order shown in Fig. 15 in the rearranging unit 63 and further inputted in the buffer 64. The final portion detecting unit 65 detects the position of the non 0 final quantized value among the quantized values rearranged. In the quantized values outputted from the buffer 64, the final consecutive quantized 0s are replaced by the end signal in the end signal insertion unit 66 according to the information from the final portion detecting unit 65.

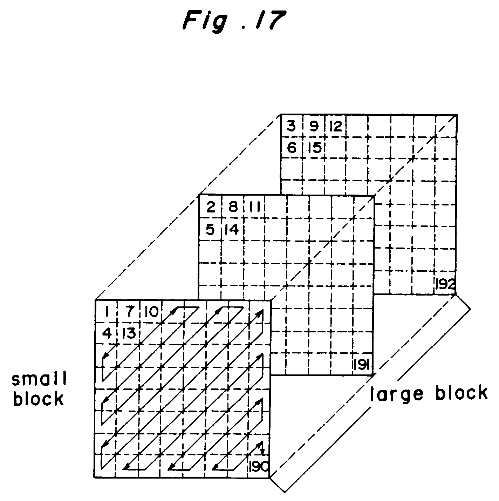

Fig. 17 shows an example of the transmission order by a third example of the transmission unit. Fig. 17 is an example in which the large block consists of three small blocks. In the respective small blocks, the left upper portions represent the low frequency range of the orthogonal components and the right lower portions represent the high frequency range of the orthogonal components. The respective numeric characters in Fig. 17 show the transmission order of the orthogonal components in the position. The respective components are transmitted sequentially from the lowest components in the large block basis. By the transmission order mentioned above, it is possible to concentrate the high frequency components in the rear half in the large block basis. Accordingly it is possible to elongate the length of the consecutive 0s. The third example of the transmission unit can be realized by rearranging the large blocks in the rearranging unit 63 in Fig. 16.

In the transmission unit mentioned above, if the data amount after the coding is too much and it becomes impossible to transmit all of the coded words, the high frequency components which are in the rear portion of the transmission order can not be transmitted. However the picture distortion of the high frequency range is unclear for the human eyes, the picture deterioration can be maintained minimum. On the other hand, if the coded word in the rear half portion can not be decoded due to the error in the transmission path and out of synchronization, the effects of the such error mainly occurs in the high frequency range the picture deterioration for the human eyes can be decreased. The transmission order in the third example may be applied to the first example of the transmission unit.

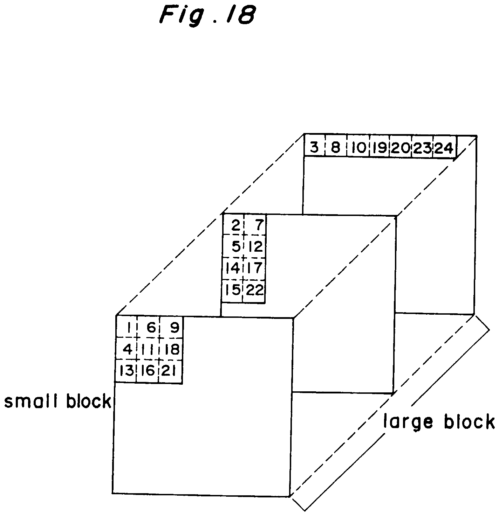

Fig. 18 shows an example in which the third example of the transmission order is applied in the first example of the transmission unit. In Fig. 18 data transmission is made from the low frequency range in the large block basis, with only the components surrounded by the rectangular shape in the transmission range. In this case it is possible to transmit the transmission range separately therefore it is not necessary to attach the end signal.

In the practical use various transmission orders are possible other than the transmission orders shown in Figs. 15 and 17. In case 3 dimension orthogonal transformation is used the transmission order may be changed for the 3 dimension.

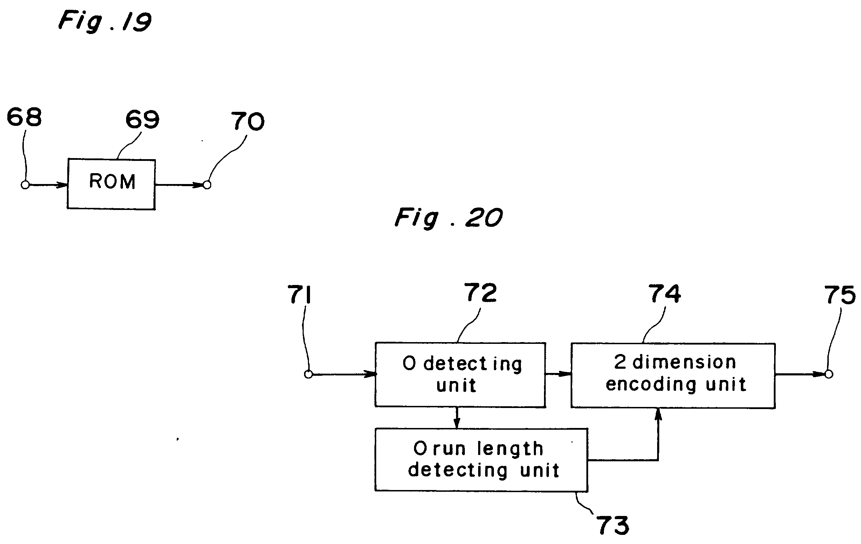

Next, the variable length coding unit according to the present invention is explained. In Fig. 19 showing the example of the variable length coding unit, 68 denotes an input terminal, 69 a ROM (read only memory), and 70 an output terminal. The quantized values inputted from the input terminal 68 are converted to the variable length codes in the ROM 69 and outputted to the output terminal 70. An example of the variable length codes is explained hereinafter.

In the first example of the variable length codes, such code as the code length is 1 bit for the quantized value 0 is used. Namely the code length $M_i$ for the quantized value $R_i$ is expressed.

For $R_i=0$, $N_i=1$.

To use the variable length codes as mentioned above facilitates to estimate the data value as explained later.

Table 2 shows the second example of the variable length coding. In the table 2, X is assigned binary value of 1 bit. In the second variable length codes, the code length $N_i$ for the number of figures $K_i$ of the absolute value of the quantized value is expressed

$$Ni = 2 \times Ki + 1.$$

In this case, the code length can be calculated easily.

In the variable length codes in the table 2, the portion $\pm 128 - 255$ may be changed as 11111111XXXXXXXX.

Table 2

| quantized value | variable length code |
|---|---|
| 0 | 0 |
| 1 | 10X |
| $\pm 2 - 3$ | 110XX |
| $\pm 4 - 7$ | 1110XXX |
| $\pm 8 - 15$ | 11110XXXX |
| $\pm 16 - 31$ | 111110XXXXX |
| $\pm 32 - 63$ | 1111110XXXXXX |
| $\pm 64 - 127$ | 11111110XXXXXXX |
| $\pm 128 - 255$ | 111111110XXXXXXXX. |

An example of code assignment is explained with reference to table 3. The input quantized values are expressed in binary form as

(S, X7, X6, X5, X4, X3, X2, X1, X0)

Wherein S is a bit for the sign of plus and minus and X7 to X0 represent binary value of the absolute value of the quantized values. X7 is the most significant position and X0 is the least significant position. The quantized values represented by 9 bits are encoded by the variable length code according to the rule shown in the table 3. However, in the present example, it can be encoded into the variable length code without any complicated calculation. Therefore, it is possible to encode without ROM shown in Fig. 19.

Table 3

| quantized value | variable length code word |
|---|---|
| X0.......X7 = 0 | 0 |
| X0 = 1, X1=.....X7 = 0 | 10S |
| X1 = 1, X2=.....X7 = 0 | 110X0S |
| X2 = 1, X3=.....X7 = 0 | 1110X0X1S |
| X3 = 1, X4=.....X7 = 0 | 11110X0X1X2S |
| X4 = 1, X5=.....X7 = 0 | 111110X0X1X2X3S |
| X5 = 1, X5=.....X7 = 0 | 1111110X0X1X2X3X4S |
| X6 = 1, X7 = 0 | 11111110X0X1X2X3X4X5S |
| X7 = 1, | 11111111SX0X1X2X3X4X5X6. |

Table 4

| quantized value | variable length code |
|---|---|
| 1 | 100X |
| $\pm 2 - 5$ | 101XXX |
| $\pm 6 - 21$ | 110XXXX |
| $\pm 22 - 53$ | 1110XXXXX |
| $+54 - 181$ | 1111XXXXXXXX. |

In the examples, it is possible to estimate the code length by only the front half of the code word. By using the variable length codes mentioned above, it is noted that the word synchronization can be maintained so long as no error occurs at the from half of code words representing the code length even if there occurs any errors in the transmission path. Moreover, when decoding the length of the code can be easily detected, decoding can be made with a relatively simple circuit arrangement.

The fourth example of the variable length coding unit is explained. Almost all components of the orthogonally transformed components are 0, therefore, the probability of consecutive generation of 0s of the quantized values is high. To encode the length of the consecutive 0s of the quantized values into the run length code enables to compress the data amount. To encode the length of the consecutive 0s of the quantized values and the non 0 quantized value appearing first after the consecutive 0s in a code word enables to compress the data amount. This coding method is referred as 2 dimension encoding hereinafter. The fourth example is explained with reference to Fig. 20. 71 denotes an input terminal, 72 a detecting unit, 73 a 0 run length detecting unit, 74 a 2 dimension encoding unit, and 75 an output terminal. The quantized values inputted from the input terminal 71 are subjected to the detection whether or not each of the quantized value is 0 in the 0 detecting unit 72. If the quantized value is 0, the run length value summed in the 0 run length detecting unit 73 is added by 1. When non 0 quantized value is detected in the 0 detecting unit 72, 2 dimension encoding is performed by the non 0 quantized value thus detected and the 0 run length value in the 2 dimension encoding unit 74, whereby the 2 dimension code is outputted to the output terminal 75, while the run length value summed in the 0 run length detecting unit 73 is reset. By this method in case where the generation probability of 0 is high the data amount can be efficiently compressed. When the code word is rearranged in the large block basis and transmitted, it is estimated that the run length of 0 is increased, so that the data compression can be made more efficiently.

Next, the data amount estimating unit is explained.

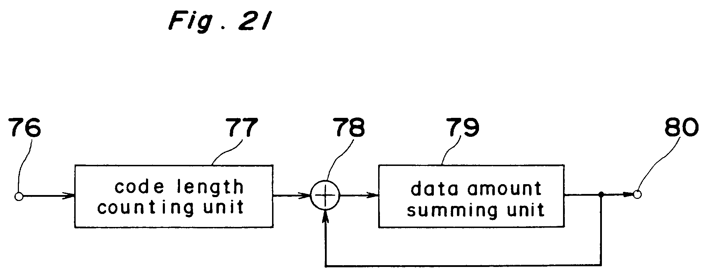

Referring to Fig. 21, 76 denotes an input terminal, 77 a code length counting unit, 78 an adder, 79 a data amount summing unit,and 80 an output terminal. The example shown in Fig. 21 is a circuit for one of the quantizer units. The orthogonally transformed component inputted from the input terminal 76 is applied to the code length counting unit 77 in which the code length of the quantized value when the quantized value is converted to the variable length code is calculated. The code length obtained in the code length counting unit 77 is added to the data amount sum before the quantization of the quantized value in the adder 78 and again the added data is inputted to the data amount summing unit 79. In this manner as mentioned above, when the data amount of one small block is calculated, the total value is outputted to the output terminal 80 from the data amount counting unit 79. The code length counting unit 77 may be composed by a ROM simply. It is noted that in order to improve the data compression efficiency, not all of the signals are transmitted by the transmission unit according to the present invention. For this purpose it is necessary to detect the signals to be transmitted and to count the data amount of the data to be transmitted.

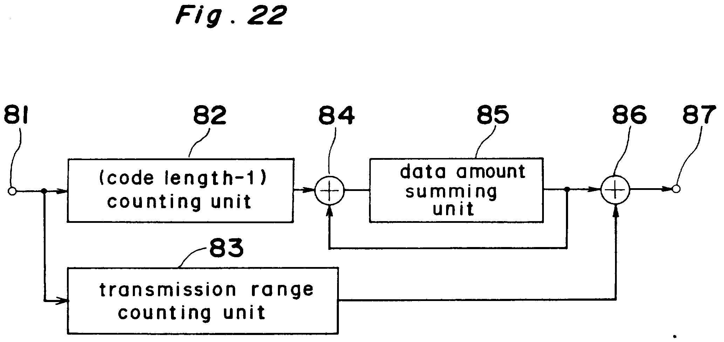

A second example of the data amount estimating unit is explained with reference to Fig. 22. In this example, detection of the signal to be transmitted and counting of the data amount are performed simultaneously. Referring to Fig. 22, 81 denotes an input terminal, 82 a (code length -1) counting unit, 83 a transmission range counting unit, 84 an adder, 85 a data amount summing unit, 86 an adder, and 87 an output terminal. The orthogonally transformed components are applied to the (code length -1) counting unit 82 and the value of (code length -1) is calculated therein. The output of the (code length -1) counting unit 82 is added to the data amount of the (code length -1) of the previous (code length -1) data amount whereby the data amount of the total value is applied again to the data amount summing unit 85. Simultaneously in the transmission range counting unit 83, the code word number of the code words to be transmitted is counted and the counted value is added to the sum of the (code length -1) outputted from the data amount summing unit 85 in the adder 86, and further outputted to the output terminal 87. The first variable length coding unit makes code length as 1 for the 0 quantized value, therefore the value of the (code length -1) is 0. Accordingly the sum of the (code length -1) for the all input signals and the code words to be transmitted is equal to the sum of the code length of the signal to be transmitted. Therefore the calculation of the data amount and the calculation of the transmission range can be made simultaneously, it becomes possible to decrease the time of the data amount estimation to half of the time necessary in the first example of the data amount estimating unit.

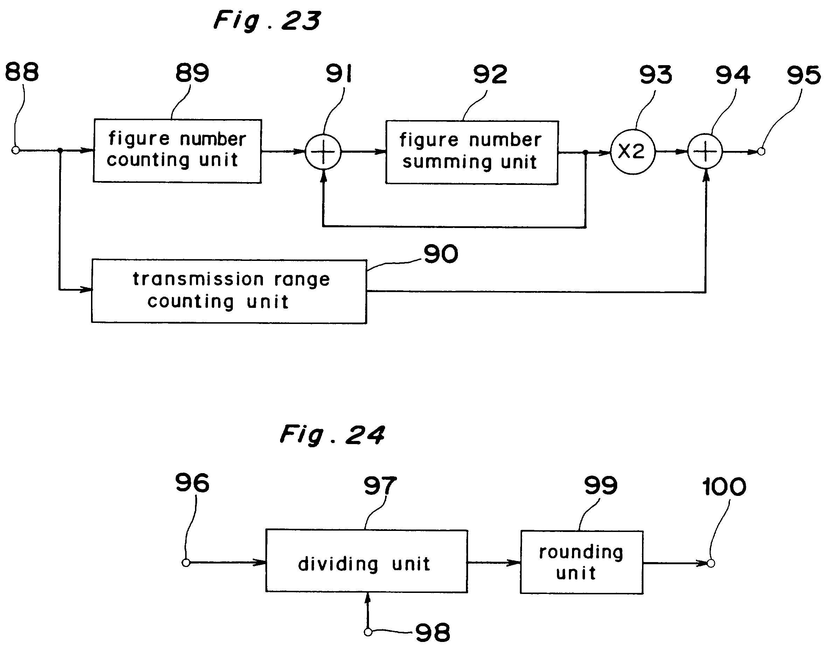

Fig. 23 shows a third example of the data amount estimating unit which is applied to the arrangement using the second example of the variable length coding unit. In Fig. 23, 88 denotes an input terminal, 89 a figure number counting unit, 90 a transmission range counting unit, 91 an adder, 92 a figure number summing unit, 93 a multiplier, 94 an adder, and 95 an output terminal. The figure number counting unit 89 calculates the figure number of the absolute value of the quantized value of the orthogonally transformed components applied to the input terminal 88. The output of the figure number counting unit 89 is added in the adder 91 to the total value of the respective figure numbers that has been summed for the previous signals before the present signal outputted from the figure number summing unit 92 and the summed value is inputted again to the figure number summing unit 92 simultaneously in the transmission range counting unit 90 the number of the coded words to be transmitted is calculated and the calculated number is added to the multiplied twice in the multiplier 93 and outputted to the output terminal 95. In the second example of the valuable length coding unit, the code length is expressed by twice the figure number of the quantized value +1, therefore the data amount can be estimated easily.

An example of the quantizing unit used in the present invention is explained hereinafter. In Fig. 24, 96 denotes an input terminal, 97 a dividing unit, 98 a quntizing range input terminal, 99 a rounding unit, 100 an output terminal. The signals inputted from the input terminal 96 are divided in the dividing unit 97 by the quantizing range value applied to the quantizing range input terminal 98 and the output of the dividing unit 97 is rounded by the rounding unit 98 and is outputted to the output terminal 100.

The arrangement in the example is equivalent to such a device having the same number of different quantizers as the number of the kinds of the quantization range. When the quantization range is small, the quantized value after the quantization is small and when the quntization range is large, the qunatized value after the quantization is large, therefore, to select the quantization range enables to vary the data amount after the quantization. The dividing unit 97 in Fig. 24 may be replaced by a ROM. When ROM is used, the same operation may be performed by inputting the number representing the quantization range.

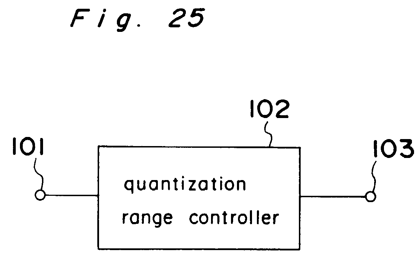

The second example of the quntizing unit is so arranged that large quantization range is assigned for the low frequency components of the DCT transformed components and small quantization range is assigned for the high frequency components of the DCT transformed components. Fig. 25 shows the second example of the quantization unit. In Fig. 25, 101 denotes an input terminal, 102 a quantization range controller, 103 an output terminal. The order of the input signals which is now being quantized is inputted to the quantization controller 102 from the input terminal 101. The quantization range controller 102 detects the frequency of the orthogonal components by the order of the input signal. In a case where the input signal is the high frequency component, the quantization range is made large and in a case where the input signal is the low frequency component, the quantization range is made small, the quantized values are outputted to the output terminal 103.

By this arrangement, since it becomes possible to concentrate the quantization distortion in the high frequency range of the orthogonal components, the visual picture quality and the block distortion due to the orthogonal transformation can be improved. Applying the second example of the quantization to the first example of the quantization, by making the difference of the quantization range in the low frequency range and the quantization range in the high frequency range in the quantizer having the larger quantization range, it is possible to make the data compression with a higher efficiency.

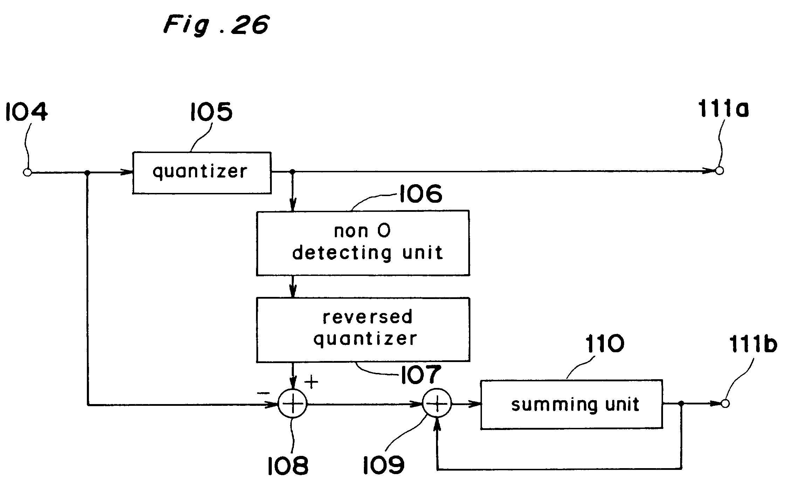

Fig. 26 shows a third example of the quantizing unit. In Fig. 26, 104 denotes an input terminal, 105 a quantizer, 106 a non 0 (zero) detecting unit, 107 a reversed quantizer, 108 a subtracter, 109 an adder, 110 a summing unit for summing the error of the quantization and 111a and 111b are output terminals. Signals fed from the input terminal 104 are quantized in the quantizer 105 and are outputted from the output terminal 111a. On the other hand, the outputs of the quantizer 105 are fed to the non 0 detecting unit 106 in which it is detected whether or not the output is 0. If the output is not 0, the non 0 output is fed to the reversed quantizer 107 in which the quantized value is reversed to its original form. The reversed value outputted from the reversed quantizer 107 is subtracted by the value of the present input signal in the subtracter 108 and the quantization error is calculated. The quantization error of the present input signal is summed, in the adder 109, to the total value of the previous quantization errors of the input signals that have been supplied before the present input signal. The total quantization error (to which the quantization error is already added in the adder 109) is again applied to the summing unit 110. In such a manner the total quantization errors of one small block are summed and outputted from the output terminal 111b. In the present example of the quantization, an average value of the quantization error of non 0 quantized values of every small block is calculated and is outputted with the quantized value. The quantization errors in the orthogonal transformation are often uneven in the small block basis. Therefore, to calculate the quantization errors for every block and to use the data of the quantization error to correct the decoded values at the time of the decoding enables to improve the quantization distortion. The signals representing the quantization error for the small block transmitted at this time can be represented by a few bits, increment of the data amount is very small.

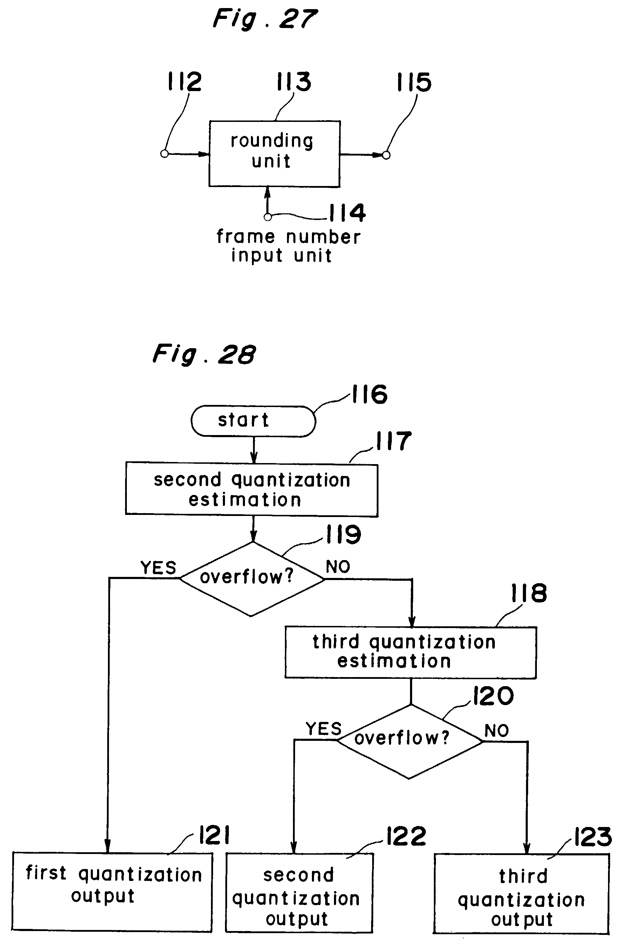

In a fourth example of the quantizing unit, signals situated on the same positions in the frame direction or field direction are quantized by separate quantizers of different quantizing property for every frame or every field. This can be realized by controlling the rounding unit 99 shown in Fig. 24. The arrangement of the fourth example is shown in Fig. 27. In Fig. 27, 112 denotes an input terminal, 113 a rounding unit, 114 a frame number input unit, 115 an output terminal. The signals divided by the quantization range and inputted from the input terminal 112 are rounded in the rounding unit 113 according to the frame number inputted from the frame number input terminal 114 and are outputted to the output terminal 115. In the example, the way of rounding is varied every consecutive frames. Using that the different quantized values are transmitted for the same orthogonal components in the field basis or frame basis, the quantization error can be cancelled at time of decoding. Therefore, in the moving picture the motion of which is small, it is possible to decrease the quantization error. In addition, due to the fact that the quantization error is different field to field or frame to frame, the distortion is scattered time to time thereby decreasing the block distortion. Although the quantization property is varied by varying the way of rounding, there may vary the quantization property by adding different offset values field to field or frame to frame.

Next, the details of the quantizer selecting unit is explained.

The first example of the quantizer selecting unit operates in such a manner as described hereinafter. Namely, when there are m candidate quantizers, data amount is estimated for such a case that if quantization is performed using about m/2 th quantizer. When the estimated data amount is larger than transmittable value, the candidate quantizers are limited to such quantizers that produces the data amount smaller than the data amount produced by the previously selected quantizer. To the contrary, if the estimated data amount smaller than the transmittable data value the candidate quantizers are limited to such quantizers which produce the data amount larger than the date amount produced by the previously selected quantizer. By this way the number of the candidate quantizers is decreased by 1/2 every estimation and repeating the above operation optimum quantizers can be decided. By this method it is possible to select the optimum quantizers by log n times of data amount estimation when there are n candidate quantizers. An example of process mentioned above is shown in a flow chart of Fig. 28. In Fig. 28, 116 denotes a start step, 117 a second quantization estimation, 118 a third quantization estimation, 119 and 120 are overflow detection, 121 a first quantization output, 122 a second quantization output, 123 a third quantization output. In this example there are provided three quantizing units, larger quantized values are outputted in the order of the third quantization, second quantization and first quantization for the same input value. First, the second qnantization estimation is made in the step 117 using the second quantization for the input value. Then the process goes to the step 119 in which it is detected whether or not the data amount obtained in the second quantiation step 117 exceeds the transmittable limit. In case of exceeding, the process goes to the step 121 to select the first quantization and goes to end. In case of not exceeding, the process goes to the step 118 in which the data amount is estimated using the third quantization and estimation. Then the process goes to the step 120 in which it is detected whether or not the data amount quantized in the third quantization exceeds the transmittable limit. In case of exceeding, the process goes to the step 122 and the second quantization is selected and the process goes to end. In case of not exceeding, the process goes to the step 123 in which the third quantization is performed and going to the end. As mentioned above, in the second example of the quantizer selecting unit, it is possible to decrease greatly the calculation amount for the data amount estimation. Also in the present example, a quantizer which produces the maximum data amount which does not exceed the upper transmittable limit, there may be selected a quantizer which produces the minimum data amount which does not fall the lower transmittable limit.

In the second example of the quantizer selecting unit, the small blocks contained in one large block is divided in two by the front half and rear half with the boundary of jth small block counted from the front, and two quantizers included in the divided groups which quantizers produce the nearest quantized data amount. In transmitting the quantized data the order number i and j of the used quantizer are coded and transmitted. In the second example, only two kinds of the quantizer unit are used in one large block. By this limitation since the number of the combination of the quantizers in the large block can be decreased, the calculation amount can be decreased. In addition the two kinds of the quantizers are selected from the groups of the front half and the rear half divided in the large block. Therefore the information representing what quantizer is used is expressed only by the boundary of the front half and the rear half, that is small j, the information to be transmitted can be made small.

The second example of the quantizer selecting unit is explained. It is assumed that there are 8 kinds of the quantizer and one large block consist of 24 small blocks. Also it is assumed that the data amount of the jth small block in the ith quantizer is expressed as D (i, j) and the following S (i, j).

$$S (i, j) = D (i, j) - D (i-1, j)$$

(It is assumed that D(-1, J) = 0, D (i-1, j))
The above equation is calculated for 24 small blocks to obtain the table 4.

Table 4

|   | 0 | 1 | 2 | ... | j | ... | 23 . |
|---|---|---|---|-----|---|-----|------|
| 0 | S(0,0) | S(0,1) | S(0.2) | ... | S(0,j) | ... | S(0,23) |
| 1 | S(1,0) | S(1,1) | S(1,2) | ... | S(1,j) | ... | S(1,23) |
| i | S(i,0) | S(i,1) | S(i,2) | ... | S(i,j) | ... | S(i,23) |
| 7 | S(7,0) | S(7,1) | S(7,2) | ... | S(7,j) | ... | S(7,23) . |

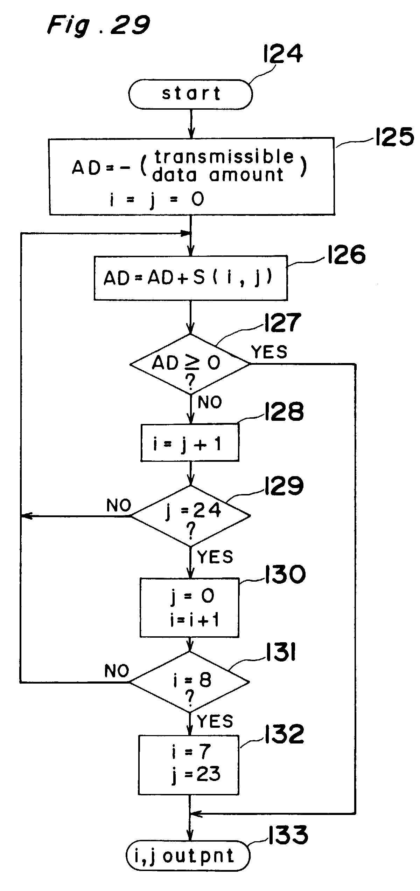

The optimum values i and j are calculated according to the process shown in Fig. 29 using the data shown in the table 4.

First, in the process 125 the initial value is set making the data amount total AD = -(transmittable data amount) and i=j=0. In the step 126 the total data amount is calculated by the equation AD = AD + S (i, j). Then the process goes to the step 127 in which it is detected that the value of AD is larger than 0, in case of more than 0 the process goes to the step 133 in which the values i, j are outputted and the process goes to end.

IN case where the value AD is negative, the process goes to the step 128 calculating j = j + 1. The process goes to the step 129 in which it is detected whether or not the value j is 24, in case of not 24 the process goes to the step 126. In case of j = 24 in the step 130, i = i + 1, J = 0 are performed.

In the step 131 it is detected whether or not the value i is 8, in case of not 8 the process goes to the step 126. In case the value i is 8, the process goes to the step 132 for making i = 7, j = 23 and the values i, j are outputted in the step 133 and the process goes to end. By this way the values i and j can be calculated. Since the values i and j can be expressed by 3 bits and 5 bits, the information what quantizer is used can be transmitted by 8 bits for the large block.

The third example of the quantizer selecting unit is arranged to operate as the following manner.

Namely, for two quantizers having different quantization width, producing the nearest quantized values when the input signals are quantized, the maximum value of the absolute value of the orthogonal transformed value is detected every small block, and the quantizer of which quantization width is small is used for the small block which produces relatively large maximum value, while the quantizer of which quantization width is small is used for the small block which produces relatively small maximum quantized value. The quantized values are transmitted with the information representing the used quantizers for quantizing the data of the respective small blocks.

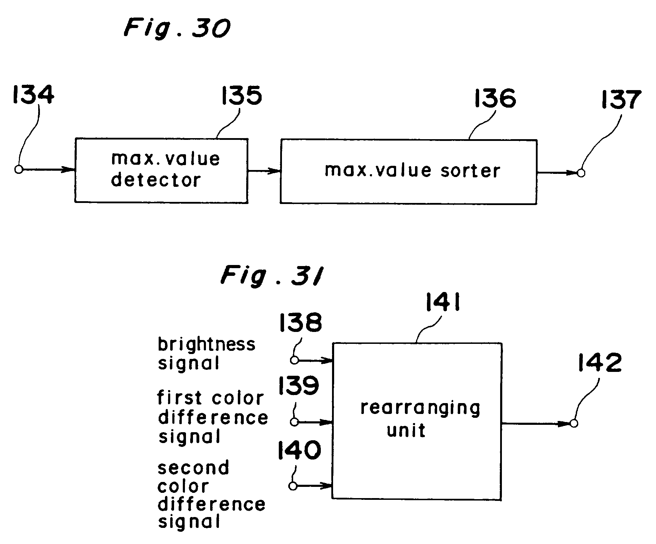

The way of assigning two quantizers is explained. Referring to Fig. 30, 134 denotes an input terminal, 135 a max. value detector, 136 a max.value sorter, 137 an output terminal. the orthogonal component inputted from the input terminal 134 is applied to the max. value detector in which the maximum value of the orthogonal component is detected every small block. In the max. value sorter 136, the order of the small blocks is calculated so that the maximum values of the respective small blocks are lined up in the order from the larger value to the small value. In this manner, the respective small blocks are arranged in the order of the larger dynamic range. Thus two quantizers are assigned to the respective small blocks in a similar manner as mentioned in the second example of the quantizer selecting unit.

In general, in the picture having large dynamic range, it is hard to find visually the picture deterioration. On the other hand, it is easy to find visually the picture deterioration in the picture having small dynamic range. Therefore, it is possible to compress the data amount preventing the visual picture deterioration by assigning the quantizer of large quantization width to the small block having a large maximum value of the absolute quantized value.

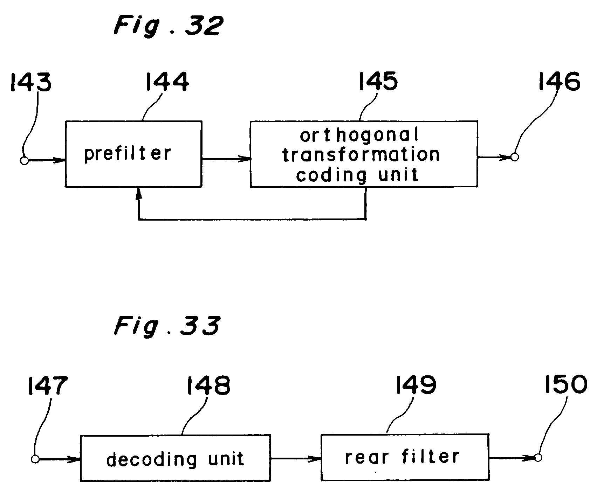

A fourth example of the quantizer selecting unit is arranged to select the quantizers for processing the brightness signals and two color difference signals. Specifically, in the fourth example, the quantizer selecting unit is arranged to select either a quantizer of relatively large quantization range range for the signals which are hard to recognize visual picture deterioration and a quantizer of relatively small quantization range for the signals which are easy to recognize visual picture deterioration. In Fig. 31, 138 denotes a brightness signal input terminal, 139 a first color difference signal input terminal, 140 a second color difference signal input terminal, 141 a re-arranging unit, 142 an output terminal. The respective orthogonal transformed components of the brightness signals, the first color difference signals and the second color difference signals inputted form the respective input terminals 138, 139 and 140 have their signal order re-arranged in the re-arranging unit 141 in such a order that the visual recognition of the picture deterioration is easier. For example, assuming that it is easy to visually detect or recognize the picture deterioration in the order of the brightness signal, the first color difference signal and the second color difference signal, the input signals are re-arranged in the order as described above. The actual re-arranging operation can be performed in the above large blocking unit. The re-arranged small blocks enable to select the quantizers in the same operation as described in the second example of the quantizer selecting unit.

Another embodiment of the present invention is described hereinafter. Fig. 32 is a block diagram of a coding unit according to the present invention, in which 143 denotes an input terminal, 144 a prefilter, 145 an orthogonal transformation coding unit, 146 an output terminal. In the embodiment shown in Fig. 32. the frequency range of the input signals is limited by the prefilter 144, The signals of which frequency is limited are coded by the orthogonal transformation coding unit and are outputted to the output terminal 146. By limiting the frequency rage by the prefilter 144, it becomes possible to improve the picture deterioration such as the block distortion due the data compression.

Fig. 33 is a block diagram of the decoding unit of the present invention in which 147 denotes an input terminal, 148 a decoding unit for decoding the signals outputted from the orthogonal transformed coding device of the present invention, 149 a rear filter, 150 an output terminal. In the device shown in Fig. 33, the coded words inputted from the input terminal 147 are decoded by the orthogonal transformed decoding unit 148. The signals decoded are outputted to the output terminal 150 through the rear filter 149 in which the frequency range of the decoded signals are limited. By limiting the frequency range of the decoded signals as mentioned above, it becomes possible to improve picture deterioration such as block distortion due to the data compression. In case where the prefilter is used at the time of coding, the limited range cut at the time of coding can be reproduced by the rear filter having an inverted band pass property of the prefilter.

The details of the prefilter is explained. A first example of the prefilter depress the high frequency components of the vertical, horizontal or skew components. In the transmission unit as described above, if the quantized values representing the high frequency components of the vertical, horizontal skew components become 0, the data amount can be greatly compressed. Since the distortion of the high frequency range signals are hard to recognize visually, by using the prefilter mentioned above, it is possible to decrease the data amount preventing the picture deterioration.

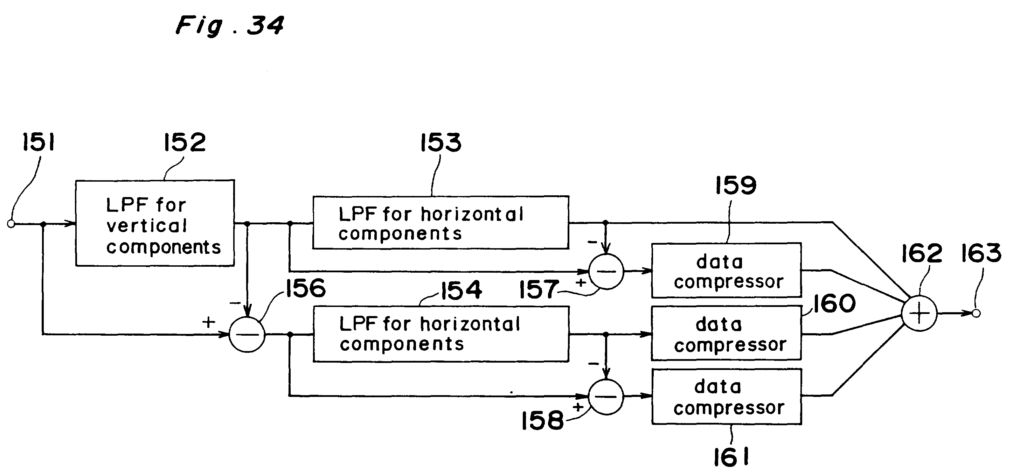

A second example of the prefilter operates to divide the input signals four ranges of low range of horizontal and vertical components, horizontal for the high range and vertical for the low range, horizontal for the low range and vertical for the high range and horizontal and vertical for the high frequency and data amounts in the respective ranges are compressed independently and the compressed data of the respective ranges are added. The second example of the prefilter is explained with reference to Fig. 34, in which 151 denotes an input terminal of the prefilter, 152 a low pass filter for the vertical component (referred to as LPF hereinafter), 153 and 154 are LPF for horizontal components. 156, 157 and 158 denote subtracters, 159, 160, 161 denote data compressors, 162 denotes an adder and and 163 denotes an output terminal.

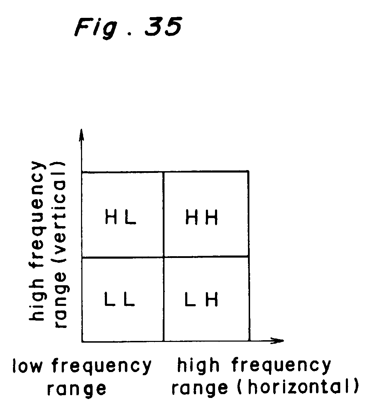

The signals inputted from the input terminal 151 are converted to the low frequency component by the vertical LPF 152 and the output of which is subtracted from the input signals in the subtracter 156, whereby the output of the vertical LPF 153 represent the low frequency component in the vertical direction of the input signals and the output of the subtracter 156 represents the high frequency components in the vertical direction of the input signals. Using the horizontal LPF 154, 155 and the subtracter 157, the two signals mentioned above can be divided further in the horizontal direction. Fig. 35 shows the two dimension frequency range dividing method. The output of the horizontal LPF 154 in Fig. 34 is shown by the area LL in Fig. 35, the output of the subtracter 157 in Fig. 34 is shown by the area LH in Fig. 35, the output of the horizontal LPF 155 in Fig. 34 is shown by the area HL and the output of the subtracter 158 in Fig. 34 is shown by the area HH in Fig. 35. The four ranges divided on the two dimensional plane except for the component LL are compressed in the data compressors 159, 160 and 191. The respective compressed components are added in the adder 162, and restored in one signal and outputted from the output terminal 43. To divide the signals into regions on the two dimensional region and to compress the data amount, the data compression can be made efficiently matching with the human eyes property. Specifically, by compressing greatly the data in the area HH where the picture deterioration is hard to be recognized, the data amount can be efficiently decreased.

The third example of the prefilter performs non linear compression in the respective areas in the second prefilter. The human eyesight is not sensitive for the amplitude distortion of the high frequency range. Therefore, the greater the amplitude of the component, the larger the compression. In this manner it is possible to concentrate the distortion to the components having the greater amplitude in the high frequency components.

The fourth example of the prefilter is provided with a suitable threshold value in the respective divided ranges and the signals smaller than the threshold values are rounded. According to the human's eyesight, since the small amplitude signals in the high frequency range are recognized as noise, such small components can be neglected. By eliminating such small components of smaller than the threshold value, amount of unnecessary information can be decreased.

The fifth example of the prefilter is adapted to control the frequency property of the prefilter in response to the quantized information of the orthogonal transformed components. A fact that a quantizer of large quantizing range is selected at the time of orthogonal transformed coding shows that the amount of the input information is large and the distortion due to the data compression is large. To the contrary, a fact that a quantizer of small quantizing range is selected shows that the input information is small and distortion due to the data compression is small. Therefore, if the selected quantization range in the past is large, the limitation by the prefilter is enhanced to decrease the frequency limitation. If the selected quantization range in the past is small, the limitation by the prefilter is reduced to decrease the distortion by the prefilter, whereby for the picture having small information amount, the picture information is coded with higher fidelity and for the picture with greater amount of the information, the data amount can be compressed preventing the visual picture quality deterioration.

The details of the rear filter are explained. A first example of the rear filter compresses or expands the high frequency components in the horizontal direction, vertical direction or skew direction of the input signals. In the orthogonal transformation coding, the effect of the quantization appears as the block distortion between the small blocks. It is possible to decrease the block distortion by compressing the high frequency components in the boundary between the small blocks by the rear filter. In case where the frequency range is limited by the prefilter at the time of coding, it is possible to reproduce the limited range by expanding the high frequency components by the rear filter.

A second example of the rear filter filters using the signals between the consecutive frames or consecutive fields, whereby it is possible to construct the filter suppressing the differential signals between the frames or fields. By this arrangement, it is possible to decrease distortion due to the data compression in the small motion picture.

A third example of the rear filter divides the input signals into four regions consisting of low frequency range for the horizontal component and vertical component, high frequency region for the horizontal component and low frequency region for the vertical component, low frequency region for the horizontal component and high frequency region of the vertical component and high frequency region for both of the horizontal component and vertical component, whereby the respective signals in the four regions are independently linearly data compressed and expanded and the signals in all of the regions are added. The arrangement to perform such operation is formed in such an arrangement as shown in Fig. 34. By the arrangement mentioned above, it is possible to eliminate the distortion due to the data compression matching with the human's eye property. If the second example of the prefilter is used, it is possible to reproduce the picture signals contained in the limited frequency range by using the rear filter of inverted property of the prefilter.

A fifth example of the rear filter is arranged to use non linear expansion to expand the respective four ranges in the third example of the rear filter. If the high frequency range is linearly expanded as made in the third example, the block distortion may be expanded. To prevent the drawback, the non linear expansion is employed so that the small high frequency component is not expanded but only the large high frequency component is expanded. In general, since the amplitude component of the block distortion is small, it becomes possible to reproduce the signals without amplifying the block distortion.

A fifth example of the rear filter is provided with a threshold value after the frequency division in the second, third or fourth examples and the values smaller than the threshold value are rounded to 0. In the human eye property, the small high frequency components are recognized as noise, effect of elimination of such small high frequency component is few even if such components are eliminated. To eliminate the component smaller than the threshold value enables to decrease the amount of the unnecessary information. Also the block distortion can be eliminated.

A sixth example of the rear filter controls the frequency property of the rear filter in response to the quantization information of the transmitted data. When a quantizer of large quantization range is used at the time of quanization and coding, this means that the distortion due to the data compression is large. Therefore, to enhance the frequency range limitation enables to decrease the effect of the quantization distortion. To the contrary, when the qauntizer of small quantization range is used, this means that the distortion due to the data compression is small. Therefore, to decrease the frequency range limitation of the rear filter enables to decrease the distortion by the rear filter. If the fifth example of the prefilter is used at the coding, it is possible to estimate the prefilter in use by the selected quantizer. Therefore, it is possible to reproduce the limited frequency component by using the rear filter having the reversed property of the used prefilter.

## Claims

1. An orthogonal transform coding device comprising

   a large block forming means (14) for assembling sample values of input signals to form a large block of the sampled input signals,
   a small block forming means (15) for forming small blocks by dividing sample values of input signals into neighboring sample values,
   an orthogonal transform means (16) for orthogonally transforming the sample values in the small block for each small block in a large block, when the small blocks collected in a predetermined number are called the large block,
   a quantizing means (20) including a plurality of quantizers each of which quantizes the orthogonally transformed components provided by said orthogonal transform means (16),
   a data amount estimating means (18) for estimating data amount,
   a selection means (19) for selecting an optimum quantizer in the quantizing means (20) for every small block corresponding to the result of the estimation of the data amount of every small block by the data amount estimating means (18),
   coding means (21) for converting the quantized value obtained in the quantizing means (20) into variable length coded data, and
   transmission means (22) for transmitting variable length codewords obtained by said quantizing means (20), and information and the like related to said selected quantizing means (20) by fixed length for each large block,

   characterized in that

   said data amount estimating means (18) comprises a plurality of quantizer units each of which quantizes the same data in said data amount estimating means (18) and includes a code length counting unit (77; 82) in which the code length of the quantized value when the quantized value is converted to the variable length code is calculated, so that said data amount estimating means (18) is provided for estimating the data amount after variable length coding by calculating the code length after quantization and variable length coding per each small block for the plurality of quantizers in said quantizing means (20), and
   said selection means (19) is provided for selecting an optimum quantizer in the quantizing means (20) for every small block so that the data amount after the variable length coding with respect to said large block suits to the data amount to be transmitted with respect to said large block, based on the data amount after the variable length coding for each of said small block.

2. The orthogonal transform coding device according to claim 1, wherein the large blocking means provide a large block of television signals within one field.

3. The orthogonal transform coding device according to claim 1, wherein the large blocking means provide a large block of a plurality of consecutive fields of the television signals.

4. The orthogonal transform coding device according to claim 1, wherein the large blocking means provide a large block of signals of picture elements juxtaposed in one picture.

5. The orthogonal transform coding device according to claim 1, wherein the large blocking means provide a large block by assembling a plurality of small blocks situated in various portions in one picture.

6. The orthogonal transform coding device according to claim 1, wherein the large blocking means provide the large blocks in such a manner that in a case where the input signals are composed of brightness signals and color difference signals, all of the large blocks include the brightness signals and the color difference signals or R,G and B signals substantially equal ratio.

7. The orthogonal transform coding device according to claim 1, wherein the small blocking means provide a small block composed of the signals included in only one field of television signals.

8. The orthogonal transform coding device according to claim 1, wherein the small blocking means provide a small block composed of the signals of a plurality of fields of television signals.

9. The orthogonal transform coding device according to claim 1, wherein the small blocking means provide a small block composed of signals in one field or one frame or a consecutive plurality of fields.

10. The orthogonal transform coding device according to claim 1, wherein the orthogonal transform means transform the data in terms of 3 dimension including horizontal direction, vertical direction and time.

11. The orthogonal transform coding device according to claim 1, wherein the transmission means re-arrange the quantized values of a small block in a transmission region made by a matrix having its origin defined by the values of the lowest frequency components with the order from the low frequency value to the high frequency value in both horizontal and vertical directions so as to include all of non zero values and transmit coded words of the quantized values included only in the transmission region and information of the transmission region.

12. The orthogonal transform coding device according to claim 1, wherein the transmission means re-arrange the quantized values of a small block in a transmission region made by a matrix having its origin defined by the values of the lowest frequency components with the order from the low frequency value to the high frequency value in both horizontal and vertical directions so as to include all of non zero values and transmit coded words of the quantized values included in the transmission region from the quantized value representing the lowest frequency component up to the quantized value representing the highest frequency component in the order from the coded word of the lowest frequency component and transmit end signal or information representing the position of the final coded word in place of transmitting the coded words after the highest frequency component of non zero is transmitted.

13. The orthogonal transform coding device according to claims 11 and 12, wherein, in a case where n small blocks are included in the large block, the transmission means transmit the coded words from the coded word representing the lowest frequency component by the large block basis in such a manner as

the first coded word in the first small block
the first coded word in the second small block
.
.
.
the first coded word in the nth small block
the second coded word in the first small block
.
.

14. The orthogonal transform coding device according to claim 1, wherein the variable length coding means encode the quantized value with the length 1 for the quantized value 0.

15. The orthogonal transform coding device according to claim 1, wherein the variable length coding means encode the quantized value with the length 2K + 1 or 2K for the number of figure K of the absolute value of the quantized value.

16. The orthogonal transform coding device according to claim 1, wherein the variable length coding means encode in such a manner that front half of the coded word represents the coded length.

17. The orthogonal transform coding device according to claim 1, wherein the variable length coding means encode the quantized values in the order defined by the data transmission means in such a manner that the number of zero of the quantized values and non zero quantized value appearing first are expressed by one coded word.

18. The orthogonal transform coding device according to claim 1, wherein the data amount estimating means calculate the data amount of the coded data by adding the code lengths of the coded data to be transmitted by the transmission means.

19. The orthogonal transform coding device according to claim 14, wherein the data amount estimating means calculate the data amount, when the variable length coding means in claim 14 is used, according to the following equation

$$\Sigma(Ni - 1) + M$$

    wherein Ni is code length of the ith encoder
        M is the number of the quantized values to be transmitted.

20. The orthogonal transform coding device according to claim 15, wherein the data amount estimating means calculate the data amount when the variable length coding means according to claim 15 is used, according to the following equation $2 \times \Sigma Ki + M$
    wherein Ki is the number of figures of the absolute value of the quantized values of ith quantizer and
        M is the number of the quantized values to be transmitted.

21. The orthogonal transform coding device according to claim 1 wherein the quantizing means comprises a plurality of quantizers each having different quantization range.

22. The orthogonal transform coding device according to claim 21, wherein the quantizers for the high frequency orthogonal transformed component have wide quantization range and the quantiers for the low frequency orthogonal transformed components have narrow quantization range.

23. The orthogonal transform coding device according to claim 21, wherein the quantizing means transmit average of the quantizing errors of the quantized values except for 0 every small block at the time of quantization and at the time of decoding, the reversed quantized values are corrected by the average value of the quantization errors.

24. The orthogonal transform coding device according to claim 21, wherein the quantizing means quantize the signals on the same position on the picture plane of the fields or frame with quantizers of different quantization ranges.

25. The orthogonal transform coding device according to claim 1, wherein the quantizer selecting means perform the steps of

    estimating the data amount obtained by the quantizer producing the m/2th data amount of quantized value when there are m candidate quantizers,
    in a case where the estimated quantized data amount is larger than the transmissible data amount, selecting only the quantizers producing the data amount smaller than the data amount produced by the quantizer which has been subjected to the data estimation, to the contrary, in a case where the estimated quantized data amount is smaller than the transmissible data amount, selecting only the quantizers producing the data amount larger than the data amount produced by the quantizer which has been subjected to the data estimation, whereby the number of the candidate quantizers are decreased 1/2, and repeats the above mentioned process so as to select the optimum quantizer.

26. The orthogonal transform coding device according to claim 1, wherein the quantizer selecting means perform the step of

   dividing the small blocks included in a large block into a front half including quantizers from the leading one to jth one and a rear half,
   selecting one quantizer from the front half and rear half, which quantizers produces the nearest quantized values,
   transmitting the quantized value and information representing the quntizers and the number j.

27. The orthogonal transform coding device according to claim 1, wherein the quantizer selecting means perform the step of

   to detect the maximum values of the absolute value of the orthogonal transformed value in every small blocks,
   to select a quantizer of large quantization width for the small block having large maximum quantized value and a quantizer of small quantization width for the block having small maximum quantization value,
   to transmit the coded data representing one of the quantizers used and information representing each small block uses what quantizer.

28. The orthogonal transform coding device according to claim 1, wherein, for the brightness signals and two color difference signals, the quantizer selecting means select a quantizer having large quantization width for the signals which are hard to recognize the visual picture deterioration and select a quantizer having small quantization width for the signals which are easy to recognize visual picture deterioration.

29. The orthogonal transform coding device according to claim 1, wherein the device further comprises at least any one of a prefilter disposed before the large blocking means and a rear filter disposed for the reproduced output at the time of decoding.

30. The orthogonal transform coding device according to claim 29, wherein the prefilter and the rear filter compresses or expands the vertical components, horizontal components or skew components of the signal.

31. The orthogonal transform coding device according to claim 30, wherein the prefilter or rear filter divides the signals into four regions consisting of low frequency regions in the horizontal direction and vertical direction, a low frequency region in the horizontal direction and a high frequency region in the vertical direction, a high frequency region in the horizontal direction and a low frequency region in the vertical direction and high frequency regions in both horizontal and vertical directions, and compress or expand the respective regions, and add the respective regions.

32. The orthogonal transform coding device according to claims 30 and 31, the prefilter and the rear filter are provided with threshold values after dividing the signals into the four regions, and rounding the signals to 0 if the output value of each region is smaller than the threshold value.

33. The orthogonal transform coding device according to claims 30, 31 and 32, the prefilter and the rear filter acts to change the width of the compression band or the threshold value in response to the information of the quantizing means selected at the time of coding.

34. The orthogonal transform coding device according to claims 29-33, wherein the rear filter filters the signals between the frames or fields.

35. The orthogonal transform coding device according to claim 1, wherein the transmission means transmit the signals according to the order of importance at the time of reproducing.

**Patentansprüche**

1. Einrichtung zur orthogonalen Transformationskodierung mit

einer einen großen Block bildenden Einrichtung (14) zum Zusammensetzen von Abtastwerten der Eingangssignale, um einen großen Block der abgetasteten Eingangssignale zu bilden,

einer einen kleinen Block bildenden Einrichtung (15) zum Bilden kleiner Blöcke durch Teilen der Abtastwerte der Eingangssignale in benachbarte Abtastwerte,

einer orthogonalen Transformationseinrichtung (16) für die orthogonale Transformation der Abtastwerte in dem kleinen Block für jeden kleinen Block in einem großen Block, wenn die in einer vorbestimmten Anzahl zusammengefaßten kleinen Blöcke als großer Block genannt werden,

einer Quantisierungseinrichtung (20), welche eine Vielzahl von Quantisierer umfaßt, von denen jeder die orthogonal transformierten Bestandteile quantisiert, die durch die orthogonale Transformationseinrichtung (16) zur Verfügung gestellt werden,

einer Datenmengenschätzungseinrichtung (18), um die Datenmenge zu schätzen,

einer Auswahleinrichtung (19) zur Auswahl eines optimalen Quantisierers in der Quantisierungseinrichtung (20) für jeden kleinen Block entsprechend dem Ergebnis der Schätzung der Datenmenge eines jeden kleinen Blocks durch die Datenmengenschätzungseinrichtung (18),

einer Kodierungseinrichtung (21) zur Umwandlung der in der Quantisierungseinrichtung (20) erhaltenen Werte in kodierte Daten variabler Länge, und

einer Übertragungseinrichtung (22) zur Übertragung der von der Quantisierungseinrichtung (20) erhaltenen Kodewörter variabler Länge und von

der ausgewählten Quantisierungseinrichtung (20) durch eine feste Länge für jeden großen Block zugehörigen Informationen und dergleichen,

dadurch gekennzeichnet, daß

die Datenmengenschätzungseinrichtung (18) eine Vielzahl von Quantisierungseinheiten enthält, von denen jede die gleichen Daten in der Datenmengenschätzungseinrichtung (18) quantisiert und eine Kodelängenzähleinheit (77; 82) beinhaltet, in der die Kodelänge des quantisierten Wertes berechnet wird, wenn der quantisierte Wert in den Kode mit variabler Länge umgewandelt wird, so daß die Datenmengenschätzungseinrichtung (18) vorgesehen ist, um die Datenmenge nach der Kodierung in variabler Länge zu schätzen, indem die Kodelänge nach der Quantisierung und der Kodierung in variabler Länge bei jedem kleinen Block für die Vielzahl von Quantisierern in der Quantisierungseinrichtung (20) berechnet wird, und

die Auswahleinrichtung (19) vorgesehen ist, um einen optimalen Quantisierer in der Quantisierungseinrichtung (20) für jeden kleinen Block auszuwählen, so daß die Datenmenge nach der Kodierung in variabler Länge in bezug auf den großen Block zu der zu übertragenden Datenmenge in bezug auf den großen Block, basierend auf der Datenmenge nach der Kodierung in variabler Länge für jeden der kleinen Blöcke paßt.

2. Einrichtung zur orthogonalen Transformationskodierung nach Anspruch 1, dadurch gekennzeichnet, daß die einen großen Block bildende Einrichtung vorgesehen ist, um einen großen Block von Fernsehsignalen in einem Feld zu erzeugen.

3. Einrichtung zur orthogonalen Transformationskodierung nach Anspruch 1, dadurch gekennzeichnet, daß die einen großen Block bildende Einrichtung einen großen Block einer Vielzahl von aufeinanderfolgenden Feldern der Fernsehsignale erzeugt.

4. Einrichtung zur orthogonalen Transformationskodierung nach Anspruch 1, dadurch gekennzeichnet, daß die einen großen Block bildende Einrichtung einen großen Block von Signalen von in einem Bild nebeneinander gestellten Bildelementen erzeugt.

5. Einrichtung zur orthogonalen Transformationskodierung nach Anspruch 1, dadurch gekennzeichnet, daß die einen großen Block bildende Einrichtung einen großen Block durch die Zusammensetzung von einer Vielzahl kleiner Blöcke erzeugt, die in verschiedenen Bereichen in einem Bild angeordnet sind.

6. Einrichtung zur orthogonalen Transformationskodierung nach Anspruch 1, dadurch gekennzeichnet, daß die einen großen Block bildende Einrichtung den großen Block in der Weise erzeugt, daß für den Fall, in dem sich die Eingangssignale aus Helligkeitssignalen und Farbdifferenzsignalen zusammensetzen, alle großen Blöcke die Helligkeitssignale und die Farbdifferenzsignale oder R-, G- und B-Signale im wesentlichen gleichen Verhältnisses enthalten.

7. Einrichtung zur orthogonalen Transformationskodierung nach Anspruch 1, dadurch gekennzeichnet, daß die einen kleinen Block bildende Einrichtung einen kleinen Block erzeugt, der aus den Signalen aufgebaut ist, die lediglich in einem Feld des Fernsehsignals enthalten sind.

8. Einrichtung zur orthogonalen Transformationskodierung nach Anspruch 1, dadurch gekennzeichnet, daß die einen kleinen Block bildende Einrichtung einen kleinen aus den Signalen einer Vielzahl von Feldern eines Fernsehsignals zusammengesetzten Block erzeugt.

9. Einrichtung zur orthogonalen Transformationskodierung nach Anspruch 1, dadurch gekennzeichnet, daß die einen kleinen Block bildende Einrichtung einen kleinen Block erzeugt, der sich aus Signalen eines Feldes oder eines Rahmens oder einer Vielzahl von aufeinanderfolgenden Feldern zusammensetzt.

10. Einrichtung zur orthogonalen Transformationskodierung nach Anspruch 1, dadurch gekennzeichnet, daß die orthogonale Transformationseinrichtung die Daten in drei Dimensionen einschließlich der horizontalen Richtung, der vertikalen Richtung und der Zeit transformiert.

11. Einrichtung zur orthogonalen Transformationskodierung nach Anspruch 1, dadurch gekennzeichnet, daß die Übertragungseinrichtung die quantisierten Werte eines kleinen Blocks in einem Übertragungsbereich neu anordnet, der durch eine Matrix erzeugt ist, deren Ursprung durch die Werte der niedrigsten Frequenzkomponenten mit der Reihenfolge von den niedrigen Frequenzwerten zu den hohen Frequenzwerten in horizontaler und vertikaler Richtung definiert ist, um sämtliche Werte ungleich Null zu umfassen und kodierte Wörter der quantisierten Werte, die nur in der Übertragungsregion enthalten sind und Informationen der Übertragungsregion zu übertragen.

12. Einrichtung zur orthogonalen Transformationskodierung nach Anspruch 1, dadurch gekennzeichnet, daß die Übertragungseinrichtung die quantisierten Werte eines kleinen Blocks in einem Übertragungsbereich neu anordnet, der durch eine Matrix gebildet ist, deren Ursprung durch die Werte der niedrigsten Frequenzkomponenten mit der Reihenfolge von den niedrigen Frequenzwerten zu den hohen Frequenzwerten in horizontaler und vertikaler Richtung definiert ist, um sämtliche Werte ungleich Null zu umfassen und kodierte Wörter der quantisierten Werte, die im Übertragungsbereich enthalten sind, von den quantisierten Werten, die die niedrigsten Frequenzkomponenten darstellen, bis zu den quantisierten Werten, die die höchsten Frequenzkomponenten darstellen, in der Reihenfolge von dem kodierten Wort der niedrigsten Frequenzkomponente und ein Endsignal oder eine Information, die die Position des letzten kodierten Wortes darstellt, anstelle der Übertragung der kodierten Wörter zu übertragen, nachdem die höchste Frequenzkomponente ungleich Null übertragen ist.

13. Einrichtung zur orthogonalen Transformationskodierung nach den Ansprüchen 11 und 12, dadurch gekennzeichnet, daß für den Fall, daß n kleine Blöcke in dem großen Block enthalten sind, die Übertragungseinrichtung die kodierten Wörter von dem kodierten Wort, welches die niedrigste Frequenzkomponente repräsentiert, auf der Grundlage des großen Blocks in folgender Weise überträgt:

das erste kodierte Wort im ersten kleinen Block

das erste kodierte Wort im zweiten kleinen Block

.
.
.

das erste kodierte Wort im n-ten kleinen Block

das zweite kodierte Wort im ersten kleinen Block

.
.

14. Einrichtung zur orthogonalen Transformationskodierung nach Anspruch 1, dadurch gekennzeichnet, daß die in variabler Länge kodierende Einrichtung den quantisierten Wert mit der Länge 1 für den quantisierten Wert Null kodiert.

15. Einrichtung zur orthogonalen Transformationskodierung nach Anspruch 1, dadurch gekennzeichnet, daß die in variabler Länge kodierende Einrichtung die quantisierten Werte mit der Länge $2K + 1$ oder $2K$ für die Anzahl von K-Stellen des absoluten Wertes des quantisierten Wertes kodiert.

**16.** Einrichtung zur orthogonalen Transformationskodierung nach Anspruch 1, dadurch gekennzeichnet, daß die in variabler Länge kodierende Einrichtung in einer Weise kodiert, daß die vordere Hälfte des kodierten Wortes die Kodelänge repräsentiert.

**17.** Einrichtung zur orthogonalen Transformationskodierung nach Anspruch 1, dadurch gekennzeichnet, daß die in variabler Länge kodierende Einrichtung die quantisierten Werte in der durch die Datenübertragungseinrichtung definierten Reihenfolge in der Weise kodiert, daß die Anzahl der Nullen der quantisierten Werte und der nicht Null quantisierten Werte, die zuerst erscheinen, durch ein kodiertes Wort ausgedrückt werden.

**18.** Einrichtung zur orthogonalen Transformationskodierung nach Anspruch 1, dadurch gekennzeichnet, daß die Datenmengenschätzungseinrichtung die Datenmenge der kodierten Daten durch Addition der Kodelängen der durch die Übertragungseinrichtung zu übertragenden kodierten Daten berechnet.

**19.** Einrichtung zur orthogonalen Transformationskodierung nach Anspruch 14, dadurch gekennzeichnet, daß die Datenmengenschätzungseinrichtung die Datenmenge, wenn die in variabler Länge kodierende Einrichtung gemäß Anspruch 14 benutzt wird, gemäß der folgenden Gleichung berechnet

$$\Sigma(Ni - 1) + M$$

wobei Ni die Kodelänge des i-ten Kodierers und
M die Anzahl der zu übertragenden quantisierten Werte ist.

**20.** Einrichtung zur orthogonalen Transformationskodierung nach Anspruch 1 5, dadurch gekennzeichnet, daß die Datenmengenschätzungseinrichtung die Datenmenge, wenn die in variabler Länge kodierende Einrichtung gemäß Anspruch 15 benutzt wird, gemäß der Gleichung $2 \times \Sigma Ki + M$ berechnet,

wobei Ki die Anzahl der Stellen des absoluten Wertes der quantisierten Werte des i-ten Quantisierers und
M die Anzahl der zu übertragenden quantisierten Werte ist.

**21.** Einrichtung zur orthogonalen Transformationskodierung nach Anspruch 1, dadurch gekennzeichnet, daß die Quantisierungseinrichtung eine Vielzahl von Quantisierern enthält, die jeweils einen unterschiedlichen Quantisierungsbereich haben.

**22.** Einrichtung zurorthogonalen Transformationskodierung nach Anspruch 21, dadurch gekennzeichnet, daß die Quantisierer für die hochfrequenten orthogonaltransformierten Komponente einen weiten Quantisierungsbereich und die Quantisierer für die niederfrequenten orthogonaltransformierten Komponenten einen schmalen Quantisierungsbereich aufweisen.

**23.** Einrichtung zur orthogonalen Transformationskodierung nach Anspruch 21, dadurch gekennzeichnet, daß die Quantisierungseinrichtung den Durchschnitt des Quantisierungsfehlers der quantisierten Werte, mit Ausnahme von Null, für jeden kleinen Block zur Zeit der Quantisierung überträgt und zum Zeitpunkt der Dekodierung die rückgeführten quantisierten Werte mit dem Durchschnittswert des Quantisierungsfehlers korrigiert.

**24.** Einrichtung zur orthogonalen Transformationskodierung nach Anspruch 21, dadurch gekennzeichnet, daß die Quantisierungseinrichtung die Signale an der gleichen Position auf der Bildebene der Felder oder Rahmen mit Quantisierern quantisiert, die einen unterschiedlichen Quantisierungsbereich aufweisen.

**25.** Einrichtung zur orthogonalen Transformationskodierung nach Anspruch 1, dadurch gekennzeichnet, daßdie Quantisiererauswahleinrichtung folgende Schritte ausführt:

die Datenmenge zu schätzen, die durch den Quantisierer erhalten wird, der die m/2-te Datenmenge quantisierter Werte produziert, wenn es m Kandidatenquantisierer gibt,
für den Fall, daß die geschätzte quantisierte Datenmenge größer als die übertragbare Datenmenge ist, nur die Quantisierer auszuwählen, die die Datenmenge produzieren, welche kleiner als die Datenmenge ist, die durch die Quantisiererer produziert wird, welche der Datenschätzung unterworfen worden sind, und im umgekehrten Fall, daß die geschätzte, quantisierte Datenmenge kleiner als die übertragbare Datenmenge ist, nur die Quantisierer auszuwählen, deren produzierte Datenmenge größer als die Datenmenge ist, die durch die Quantisierer produziert wird,
welche der Datenschätzung unterworfen worden sind,
wobei die Anzahl der Kandidatenquantisierer auf die Hälfte reduziert wird und der vorstehend beschriebene Ablauf wiederholt wird, um den optimalen Quantisierer auszuwählen.

**26.** Einrichtung zur orthogonalen Transformationskodierung nach Anspruch 1, dadurch gekennzeichnet, daß die Quantisiererauswahleinrichtung die folgenden Schritte ausführt,

die in einem großen Block enthaltenen kleinen Blöcke in eine vordere Hälfte, die Quantisierer von der führenden bis zur j-ten Stelle umfaßt, und eine hintere Hälfte zu teilen,
einen Quantisierer von der vorderen Hälfte und hinteren Hälfte, der den nächstkommenden quantisierten Wert produziert, auszuwählen, und
den quantisierten Wert und die Information zu übertragen, welche die Quantisierer und die Nummer j repräsentiert.

**27.** Einrichtung zur orthogonalen Transformationskodierung nach Anspruch 1, dadurch gekennzeichnet, daß die Quantisiererauswahleinrichtung die folgenden Schritte durchführt:

den Maximalwert der absoluten Werte der orthogonaltransformierten Werte in jedem kleinen Block zu erfassen,
einen Quantisierer von großer Quantisierungsweite für den kleinen Block mit einem großen maximalen quantisierten Wert und einen Quantisierer von kleiner Quantisierungsweite für den Block mit einem kleinen maximalen Quantisierungswert auszuwählen, und
die kodierten Daten, die einen der genutzten Quantisierer repräsentieren, und Informationen zu übertragen, die darstellen, welcher kleine Block welchen Quantisierer benutzt.

**28.** Einrichtung zur orthogonalen Transformationskodierung nach Anspruch 1, dadurch gekennzeichnet, daß für das Helligkeitssignal und zwei Farbdifferenzsignale die Quantisiererauswahleinrichtung einen Quantisierer auswählt, der eine große Quantisierungsweite für die Signale besitzt, bei denen eine visuelle Bildverschlechterung schwer zu erkennen ist, und einen Quantisierer mit schmaler Quantisierungsweite für Signale auswählt, bei denen eine visuelle Bildverschlechterung leicht zu erkennen ist.

**29.** Einrichtung zur orthogonalen Transformationskodierung nach Anspruch 1, dadurch gekennzeichnet, daß die Einrichtung weiterhin mindestens irgendeinen Vorfilter, der vor der einen großen Block bildenden Einrichtung vorgesehen ist, und ein hinteres Filter aufweist, der für die wiedergegebene Ausgabe zur Zeit der Dekodierung vorgesehen ist.

**30.** Einrichtung zur orthogonalen Transformationskodierung nach Anspruch 29, dadurch gekennzeichnet, daß das Vorfilter und das hintere Filter die vertikalen Komponenten, horizontalen Komponenten oder schrägen Komponenten des Signals komprimieren oder expandieren.

**31.** Einrichtung zurorthogonalen Transformationskodierung nach Anspruch 30, dadurch gekennzeichnet, daß das Vorfilter oder das hintere Filter die Signale in vier Bereiche einteilten, welche aus Niederfrequenzbereichen in der horizontalen Richtung und der vertikalen Richtung, einen Niederfrequenzbereich in der horizontalen Richtung und einen Hochfrequenzbereich in der vertikalen Richtung, einen Hochfrequenzbereich in der horizontalen Richtung und einen Niederfrequenzbereich in der vertikalen Richtung und Hochfrequenzbereiche in beiden horizontalen und vertikalen Richtungen bestehen, und die entsprechenden Regionen komprimieren oder expandieren und die entsprechenden Regionen addieren.

**32.** Einrichtung zur orthogonalen Transformationskodierung nach den Ansprüchen 30 und 31,
dadurch gekennzeichnet, daß das Vorfilter und das hintere Filter mit Schwellwerten nach der Teilung der Signale in die vier Bereiche und Rundung der Signale auf Null, wenn der Ausgangswert von einem Bereich kleiner als der Schwellwert ist, versehen werden.

**33.** Einrichtung zur orthogonalen Transformationskodierung nach den Ansprüchen 30, 31 und 32,
dadurch gekennzeichnet, daß das Vorfilter und das hintere Filter die Weite des Kompressionsbandes oder des Schwellwertes in Abhängigkeit der zur Zeit der Kodierung ausgewählten Quantisierungseinrichtung ändern.

**34.** Einrichtung zur orthogonalen Transformationskodierung nach den Ansprüchen 29 bis 33, dadurch gekennzeichnet, daß das hintere Filter die Signale zwischen den Rahmen oder Feldern filtert.

**35.** Einrichtung zur orthogonalen Transformationskodierung nach Anspruch 1, dadurch gekennzeichnet, daß die Übertragungseinrichtung die Signale nach der Reihenfolge der Wichtigkeit zur Zeit der Reproduktion überträgt.

**Revendications**

**1.** Dispositif de codage par transformation orthogonale comprenant

un moyen de formation de grand bloc (14) destiné à assembler des valeurs d'échantillons de signaux en entrée afin de former un grand bloc à partir des signaux en entrée échantillonnés,
un moyen de formation de petits blocs (15) destiné à former des petits blocs en divisant les valeurs d'échantillons des signaux d'entrée en valeurs d'échantillons voisines,
un moyen de transformation orthogonale (16) destiné à transformer orthogonalement les valeurs d'échantillons dans le petit bloc pour chaque petit bloc dans un grand bloc, lorsque les petits blocs regroupés en un nombre prédéterminé sont appelés grand bloc,
un moyen de quantification (20) comprenant une pluralité de quantificateurs, dont chacun quantifie les composantes transformées orthogonalement procurées par ledit moyen de transformation orthogonale (16),
un moyen d'estimation de quantité de données (18) destiné à estimer une quantité de données,
un moyen de sélection (19) destiné à sélectionner un quantificateur optimum dans le moyen de quantification (20) pour chaque petit bloc correspondant au résultat de l'estimation de la quantité de données de chaque petit bloc, par le moyen d'estimation de quantité de données (18),
un moyen de codage (21) destiné à convertir la valeur quantifiée obtenue dans le moyen de quantification (20) en données codées à longueur variable, et
un moyen de transmission (22) destiné à transmettre des mots de code à longueur variable obtenus par ledit moyen de quantification (20), et des informations et analogues se rapportant audit moyen de quantification sélectionné (20) à longueur fixée pour chaque grand bloc, caractérisé en ce que
ledit moyen d'estimation de quantité de données (18) comprend une pluralité d'unités de quantificateur dont chacune quantifie les mêmes données dans ledit moyen d'estimation de quantité de données (18) et comprend une unité de comptage de longueur de code (77 ; 82) dans laquelle la longueur de code de la valeur quantifiée, lorsque la valeur quantifiée est convertie en code à longueur variable, est calculée, de sorte que ledit moyen d'estimation de quantité de données (18) est prévu pour estimer la quantité de données après le codage à longueur variable en calculant la longueur de code après la quantification et le codage à longueur variable pour chaque petit bloc pour la pluralité de quantificateurs dans ledit moyen de quantification (20), et
ledit moyen de sélection (19) est prévu pour sélectionner un quantificateur optimum dans le moyen de quantification (20) pour chaque petit bloc de sorte que la quantité de données après le codage à longueur variable en fonction dudit grand bloc convienne à la quantité de données à transmettre en fonction dudit grand bloc, sur la base de la quantité de données après le codage à longueur variable pour chaque dit petit bloc.

**2.** Dispositif de codage par transformation orthogonale selon la revendication 1, dans lequel le moyen de formation de grand bloc procure un grand bloc de signaux de télévision à l'intérieur d'un balayage de trame.

**3.** Dispositif de codage par transformation orthogonale selon la revendication 1, dans lequel le moyen de formation de grand bloc procure un grand bloc d'une pluralité de balayages de trame consécutifs de signaux de télévision.

**4.** Dispositif de codage par transformation orthogonale selon la revendication 1, dans lequel le moyen de formation de grand bloc procure un grand bloc de signaux d'éléments d'image juxtaposés dans une image.

**5.** Dispositif de codage par transformation orthogonale selon la revendication 1, dans lequel le moyen de formation de grand bloc procure un grand bloc en assemblant une pluralité de petits blocs situés dans diverses parties d'une image.

**6.** Dispositif de codage par transformation orthogonale selon la revendication 1, dans lequel le moyen de formation de grand bloc procure les grands blocs d'une manière telle que dans le cas où les signaux d'entrée sont composés de signaux de brillance et de signaux de différence de couleur, tous les grands blocs comprennent les signaux de brillance et les signaux de différence de couleur ou les signaux R, G et B (rouge, vert et bleu) dans un rapport pratiquement égal.

**7.** Dispositif de codage par transformation orthogonale selon la revendication 1, dans lequel le moyen de formation de petits blocs procure un petit bloc composé de signaux inclus dans un seul balayage de trame des signaux de télévision.

**8.** Dispositif de codage par transformation orthogonale selon la revendication 1, dans lequel le moyen de formation de petits blocs procure un petit bloc composé de signaux d'une pluralité de balayages de trame de signaux de télévision.

**9.** Dispositif de codage par transformation orthogonale selon la revendication 1, dans lequel le moyen de formation de petits blocs procure un petit bloc composé de signaux dans un balayage de trame ou une trame ou une pluralité de balayages de trame consécutifs.

**10.** Dispositif de codage par transformation orthogonale selon la revendication 1, dans lequel le moyen de transformation orthogonale transforme les données suivant 3 dimensions comprenant la direction horizontale, la direction verticale et le temps.

**11.** Dispositif de codage par transformation orthogonale selon la revendication 1, dans lequel le moyen de transmission ré-agence les valeurs quantifiées d'un petit bloc dans une région de transmission établie par une matrice ayant son origine définie par les valeurs des composantes à fréquence la plus faible dans l'ordre allant de la valeur à fréquence faible à la valeur à fréquence élevée à la fois dans les directions horizontale et verticale de façon à inclure toutes les valeurs non nulles et à transmettre les mots codés des valeurs quantifiées incluses uniquement dans la région de transmission et les informations de la région de transmission.

**12.** Dispositif de codage par transformation orthogonale selon la revendication 1, dans lequel le moyen de transmission ré-agence les valeurs quantifiées d'un petit bloc dans une région de transmission établie par une matrice ayant son origine définie par les valeurs des composantes à fréquence la plus faible dans l'ordre allant de la valeur à fréquence faible à la valeur à fréquence élevée à la fois dans les directions horizontale et verticale de façon à inclure toutes les valeurs non nulles et à transmettre les mots codés des valeurs quantifiées incluses dans la région de transmission depuis la valeur quantifiée représentant la composante à fréquence la plus faible jusqu'à la valeur quantifiée représentant la composante à fréquence la plus élevée dans l'ordre partant du mot codé présentant la composante à fréquence la plus faible et à transmettre un signal de fin ou des informations représentant la position du mot codé final au lieu de transmettre les mots codés après que la composante à fréquence la plus élevée à valeur non nulle a été transmise.

**13.** Dispositif de codage par transformation orthogonale selon les revendications 11 et 12, dans lequel, dans le cas où n petits blocs sont inclus dans le grand bloc, le moyen de transmission transmet les mots codés à partir du mot codé représentant la composante à fréquence la plus faible sur un principe d'un grand bloc organisé de la manière suivante

le premier mot codé dans le premier petit bloc
le premier mot codé dans le second petit bloc
.
.
.
le premier mot codé dans le énième petit bloc
le second mot codé dans le premier petit bloc
.
.

**14.** Dispositif de codage par transformation orthogonale selon la revendication 1, dans lequel le moyen de codage à longueur variable code la valeur quantifiée avec la longueur 1 pour la valeur quantifiée 0.

**15.** Dispositif de codage par transformation orthogonale selon la revendication 1, dans lequel le moyen de codage à longueur variable code la valeur quantifiée avec la longueur $2K + 1$ ou $2K$ pour le nombre de chiffres $K$ de la valeur absolue de la valeur quantifiée.

# EP 0 401 854 B1

**16.** Dispositif de codage par transformation orthogonale selon la revendication 1, dans lequel le moyen de codage à longueur variable code d'une manière telle que la moitié avant du mot codé représente la longueur codée.

**17.** Dispositif de codage par transformation orthogonale selon la revendication 1, dans lequel le moyen de codage à longueur variable code les valeurs quantifiées dans l'ordre défini par le moyen de transmission de données d'une manière telle que le nombre de zéros des valeurs quantifiées et de la valeur quantifiée non nulle apparaissant en premier soit exprimé par un mot codé.

**18.** Dispositif de codage par transformation orthogonale selon la revendication 1, dans lequel le moyen d'estimation de quantité de données calcule la quantité de données des données codées en additionnant les longueurs de code des données codées à transmettre par le moyen de transmission.

**19.** Dispositif de codage par transformation orthogonale selon la revendication 14, dans lequel le moyen d'estimation de quantité de données calcule la quantité de données, lorsque le moyen de codage à longueur variable de la revendication 14 est utilisé, conformément à l'équation suivante

$$\Sigma(Ni - 1) + M$$

dans laquelle Ni est la longueur de code du ième codeur
M est le nombre des valeurs quantifiées à transmettre.

**20.** Dispositif de codage par transformation orthogonale selon la revendication 15, dans lequel le moyen d'estimation de quantité de données calcule la quantité de données, lorsque le moyen de codage à longueur variable selon la revendication 15 est utilisé, conformément à l'équation suivante : $2 \times \Sigma Ki + M$
dans laquelle Ki est le nombre de chiffres de la valeur absolue des valeurs quantifiées du ième quantificateur et
M est le nombre des valeurs quantifiées à transmettre.

**21.** Dispositif de codage par transformation orthogonale selon la revendication 1, dans lequel le moyen de quantification comprend une pluralité de quantificateurs, chacun présentant une plage de quantification différente.

**22.** Dispositif de codage par transformation orthogonale selon la revendication 21, dans lequel les quantificateurs destinés à la composante transformée orthogonale à haute fréquence présentent une plage de quantification large et les quantificateurs destinés aux composantes transformées orthogonales à faible fréquence présentent une plage de quantification étroite.

**23.** Dispositif de codage par transformation orthogonale selon la revendication 21, dans lequel le moyen de quantification transmet une moyenne des erreurs de quantification des valeurs quantifiées à l'exception de 0 pour chaque petit bloc à l'instant de la quantification, et à l'instant du décodage, les valeurs quantifiées inversées sont corrigées par la valeur moyenne des erreurs de quantification.

**24.** Dispositif de codage par transformation orthogonale selon la revendication 21, dans lequel le moyen de quantification quantifie les signaux sur la même position sur le plan d'image des balayages de trame ou de la trame avec des quantificateurs présentant des plages de quantification différentes.

**25.** Dispositif de codage par transformation orthogonale selon la revendication 1, dans lequel le moyen de sélection de quantificateur exécute les étapes consistant à

estimer la quantité de données obtenues par le quantificateur produisant la m/2ème quantité de données de valeur quantifiée lorsqu'il y a n quantificateurs candidats,
dans le cas où la quantité de données quantifiées estimée est plus grande que la quantité de données qui peut être transmise, sélectionner uniquement les quantificateurs produisant la quantité de données plus petite que la quantité de données produite par le quantificateur qui a été soumis à l'estimation de données, et au contraire, dans le cas où la quantité de données quantifiées estimée est plus petite que la quantité de données qui peut être transmise, ne sélectionner que les quantificateurs produisant la quantité de données plus grande que la quantité de données produite par le quantificateur qui a été soumis à l'estimation de données,
d'où il résulte que le nombre des quantificateurs candidats est diminué de 1/2, et que l'on répète le processus mentionné ci-dessus de façon à sélectionner le quantificateur optimum.

**26.** Dispositif de codage par transformation orthogonale selon la revendication 1, dans lequel le moyen de sélection de quantificateur exécute l'étape consistant à

diviser les petits blocs inclus dans un grand bloc en une moitié avant comprenant les quantificateurs à partir de celui qui est en tête jusqu'au jème, et une moitié arrière,

sélectionner un quantificateur à partir de la moitié avant et de la moitié arrière, lesquels quantificateurs produisent les valeurs quantifiées les plus proches,

transmettre la valeur quantifiée et les informations représentant les quantificateurs et le nombre j.

**27.** Dispositif de codage par transformation orthogonale selon la revendication 1, dans lequel le moyen de sélection de quantificateur exécute l'étape consistant à

détecter les valeurs maximum de la valeur absolue de la valeur transformée orthogonale dans chacun des petits blocs,

sélectionner un quantificateur présentant une grande largeur de quantification pour le petit bloc présentant la grande valeur quantifiée maximum, et un quantificateur présentant une petite largeur de quantification pour le bloc présentant la petite valeur de quantification maximum,

transmettre les données codées représentant l'un des quantificateurs utilisés et des informations indiquant quel quantificateur utilise chaque petit bloc.

**28.** Dispositif de codage par transformation orthogonale selon la revendication 1, dans lequel, en ce qui concerne les signaux de brillance et deux signaux de différence de couleur, le moyen de sélection de quantificateur sélectionne un quantificateur présentant une grande largeur de quantification pour les signaux pour lesquels il est difficile de reconnaître la détérioration visuelle de l'image, et sélectionne un quantificateur présentant une petite largeur de quantification pour les signaux pour lesquels il est facile de reconnaître une détérioration visuelle de l'image.

**29.** Dispositif de codage par transformation orthogonale selon la revendication 1, dans lequel le dispositif comprend en outre au moins l'un quelconque d'un pré-filtre disposé avant le moyen de formation de grand bloc et d'un filtre arrière disposé pour la sortie reproduite à l'instant du décodage.

**30.** Dispositif de codage par transformation orthogonale selon la revendication 29, dans lequel le pré-filtre et le filtre arrière compressent ou réalisent une expansion des composantes verticales, des composantes horizontales ou des composantes obliques du signal.

**31.** Dispositif de codage par transformation orthogonale selon la revendication 30, dans lequel le pré-filtre ou le filtre arrière divise les signaux en quatre régions constituées de régions à faible fréquence dans la direction horizontale et la direction verticale, d'une région à faible fréquence dans la direction horizontale et d'une région à fréquence élevée dans la direction verticale, d'une région à fréquence élevée dans la direction horizontale et d'une région à faible fréquence dans la direction verticale et de régions à fréquence élevée à la fois dans les directions horizontale et verticale, et compresse ou réalise une expansion des régions respectives et ajoute les régions respectives.

**32.** Dispositif de codage par transformation orthogonale selon les revendications 30 et 31, le pré-filtre et le filtre arrière étant munis de valeurs de seuil après la division des signaux en quatre régions, et les signaux étant arrondis à 0 si la valeur de sortie de chaque région est plus petite que la valeur de seuil.

**33.** Dispositif de codage par transformation orthogonale selon les revendications 30, 31 et 32, le pré-filtre et le filtre arrière agissant pour modifier la largeur de la bande de compression ou la valeur de seuil en réponse aux informations concernant le moyen de quantification sélectionné au moment du codage.

**34.** Dispositif de codage par transformation orthogonale selon les revendications 29 à 33, dans lequel le filtre arrière filtre les signaux entre les trames ou les balayages de trame.

**35.** Dispositif de codage par transformation orthogonale selon la revendication 1, dans lequel le moyen de transmission transmet les signaux conformément à l'ordre de l'importance au moment de la reproduction.

## Fig . 1

```
1        2              3           4                 5                        6         7
○──→ ┌─────────┐ ──→ ┌──────┐ ──→ ┌──────────┐ ──→ ┌──────────────┐ ──→ ┌────────┐ ──→ ○
     │ blocking│     │ DCT  │     │ adaptive │     │  variable    │     │  data  │
     │  unit   │     │ unit │     │quantizer │     │length encoder│     │ buffer │
     └─────────┘     └──────┘     └──────────┘     └──────────────┘     └────────┘
                                        ↑                                     │
                                        └─────────────────────────────────────┘
```

## Fig . 2

```
8          9                    10                    11   12
○──→ ┌───────────┐ ──→ ┌─────────────────────┐ ──→
     │   A / D   │     │ orthogonal transform │
     │ converter │     │    coding device     │
     └───────────┘     └─────────────────────┘
```

EP 0 401 854 B1

# Fig. 3

## Fig. 4

## Fig. 5

## Fig . 6

large block

small
block

## Fig . 7

small block

Fig. 8

brightness signal — 32

first color difference signal — 33

second color difference signal — 34

35 — frame memory — 37

36 — address code controller

Fig. 9

38 — 39 memory — 42

40 — address controller

41 — motion detecting unit

EP 0 401 854 B1

## Fig .10

43　　　　　44　　　　　　　45　　　　　　46　　　47

| horizontal DCT unit | → | data arranging unit | → | vertical DCT unit |

## Fig . 11

low frequency range     high frequency range (horizontal)

## Fig . 13

low frequency range     high frequency range (horizontal)

|   | 0 | 1 | 2 | 3 | 4 | 5 | 6 | 7 |
|---|---|---|---|---|---|---|---|---|
| 0 | 45 | 27 | -9 | -3 | 10 | -3 | 0 | 0 |
| 1 | 13 | 9 | 2 | 0 | 0 | 1 | 0 | 0 |
| 2 | -3 | -2 | 0 | 2 | 1 | 0 | 0 | 0 |
| 3 | 3 | 0 | 1 | -1 | 0 | 0 | 0 | 0 |
| 4 | 1 | 0 | 0 | 0 | 0 | 0 | 0 | 0 |
| 5 | 0 | 0 | 0 | 0 | 0 | 0 | 0 | 0 |
| 6 | 0 | 0 | 0 | 0 | 0 | 0 | 0 | 0 |
| 7 | 0 | 0 | 0 | 0 | 0 | 0 | 0 | 0 |

high frequency range (vertical)

EP 0 401 854 B1

## Fig. 12

EP 0 401 854 B1

## Fig . 14

**56** horizontal direction high range detecting unit

**57** vertical direction high range detecting unit

**55**

**58** buffer

**59** transmission range detecting unit

**60** gate

**61a**

**61b**

*Fig . 15*

|  | low frequency range | | | | high frequency range (horizontal) → | | | |
|---|---|---|---|---|---|---|---|---|
|  | 0 | 1 | 2 | 3 | 4 | 5 | 6 | 7 |
| 0 | 1 | 3 | 4 | 10 | 11 | 21 | 22 | 36 |
| 1 | 2 | 5 | 9 | 12 | 20 | 23 | 35 | 37 |
| 2 | 6 | 8 | 13 | 19 | 24 | 34 | 38 | 49 |
| 3 | 7 | 14 | 18 | 25 | 33 | 39 | 48 | 50 |
| 4 | 15 | 17 | 26 | 32 | 40 | 47 | 51 | 58 |
| 5 | 16 | 27 | 31 | 41 | 46 | 52 | 57 | 59 |
| 6 | 28 | 30 | 42 | 45 | 53 | 56 | 60 | 63 |
| 7 | 29 | 43 | 44 | 54 | 55 | 61 | 62 | 64 |

high frequency range (vertical)

Fig. 16

62 — rearranging unit (63) — buffer (64) — end signal insertion unit (66) — 67

65 — final portion detecting unit

36

## Fig . 17

*Fig .18*

small block

large block

3 | 8 | 10 | 19 | 20 | 23 | 24

2 | 7
5 | 12
14 | 17
15 | 22

1 | 6 | 9
4 | 11 | 18
13 | 16 | 21

## Fig . 19

68　　　69　　　70

```
→ | ROM | →
```

## Fig . 20

71　　　72　　　74　　　75

```
→ | 0 detecting
      unit | → | 2 dimension
                 encoding unit | →
```

```
| 0 run length
   detecting unit |
```

73

EP 0 401 854 B1

EP 0 401 854 B1

# Fig. 21

76 → code length counting unit (77) → ⊕ (78) → data amount summing unit (79) → 80

## Fig. 22

EP 0 401 854 B1

81  82  84  85  86  87

81 →

82 (code length-1) counting unit

84 ⊕

85 data amount summing unit

86 ⊕

87 →

83 transmission range counting unit

## Fig. 23

## Fig. 24

EP 0 401 854 B1

*Fig. 25*

Fig .26

EP 0 401 854 B1

*Fig . 27*

112    113    115

rounding
unit

114

frame number
input unit

*Fig . 28*

116

start

117

second quantization
estimation

119

YES    overflow?    NO

118

third quantization
estimation

120

YES    overflow?    NO

121    122    123

first quantization
output

second
quantization
output

third
quantization
output

## Fig . 29

Flowchart:

124 — **start**

125 — AD = − ( transmissible data amount ) ; i = j = 0

126 — AD = AD + S ( i , j )

127 — AD ≥ 0 ? — YES / NO

128 — i = j + 1

129 — j = 24 ? — NO / YES

130 — j = 0 ; i = i + 1

131 — i = 8 ? — NO / YES

132 — i = 7 ; j = 23

133 — i, j outpnt

## Fig. 30

134          135                          136         137

```
          ┌─────────────┐      ┌──────────────────┐
  ──○────▶│ max.value   │────▶ │ max.value sorter │────▶○
          │ detector    │      │                  │
          └─────────────┘      └──────────────────┘
```

## Fig. 31

141

brightness   138
signal

first color   139
difference
signal

second   140
color
difference
signal

```
                    ┌──────────────┐
  brightness ──○──▶ │              │
  signal            │              │
                    │  rearranging │ ──▶○  142
  first color ─○──▶ │     unit     │
  difference        │              │
  signal            │              │
                    │              │
  second ──○──────▶ │              │
  color             └──────────────┘
  difference
  signal
```

EP 0 401 854 B1

## Fig. 32

143      144             145          146

prefilter → orthogonal transformation coding unit

## Fig. 33

147      148             149          150

decoding unit → rear filter

EP 0 401 854 B1

EP 0 401 854 B1

*Fig . 34*

## Fig . 35

high frequency range (vertical)

| H L | H H |
| L L | L H |

low frequency range    high frequency range (horizontal)